# EUROPEAN PATENT SPECIFICATION

(11) **EP 2 998 786 B1**
(45) Date of publication and mention of the grant of the patent: **28.11.2018**
(21) Application number: 15182332.5
(22) Date of filing: 25.08.2015
(51) Int. Cl.: G02F 1/137, G02F 1/1337, G02F 1/1333

(54) **A CHIRAL NEMATIC LIQUID CRYSTAL LIGHT SHUTTER**
CHIRAL-NEMATISCHES FLÜSSIGKRISTALL-LICHTVENTIL
VALVE A LUMIERE A CRISTAUX-LIQUIDES CHIRAL-NEMATIQUES

(30) Priority: 17.09.2014 GB 201416385
(43) Date of publication of application: 23.03.2016
(73) Proprietor: Vlyte Innovations Limited, Shannon, V14 WV79 Co. Clare (IE); Vlyte Limited, County Clare (IE)
(72) Inventor: O'KEEFFE, Donal, Co. Clare, V94 Y6F8 (IE); O'HALLORAN, Albert, County Clare (IE)
(74) Representative: Hanna Moore + Curley

(56) References cited:
- US-A- 4 447 132
- US-A1- 2013 265 289
- CHOI SU ET AL: "High contrast chiral nematic liquid crystal device using negative dielectric material", APPLIED PHYSICS LETTERS, A I P PUBLISHING LLC, US, vol. 95, no. 19, 10 November 2009 (2009-11-10), pages 193502-193502, XP012126454, ISSN: 0003-6951, DOI: 10.1063/1.3248219

## Description

### Field

The present invention relates to a chiral nematic liquid crystal light shutter and glazing incorporating the device.

### Background to the Invention

In the prior art of liquid crystal display (LCD) films for display applications, US4,447,132 discloses a matrix display device having a cholesteric liquid crystal showing a frequency-dependent relaxation of a positive to a negative dielectric anisotropy. After writing display information, the light-scattering picture elements have a focal-conical texture and the transparent elements have a homeotropic-nematic texture. The homeotropic-nematic texture of the transparent elements changes into the substantially transparent planar-conical texture by applying a voltage with a frequency at which the liquid crystal has a negative dielectric anisotropy across all picture elements. The focal-conical texture of the light-scattering elements is substantially not disturbed by this voltage. During the presence of this voltage the display information is continuously visible.

US2013/265289 discloses a cholesteric liquid crystal display device including a first substrate, a second substrate, a cholesteric liquid crystal layer and a plurality of nano-particles. The first substrate includes a first alignment layer. The second substrate includes a second alignment layer. The cholesteric liquid crystal layer is disposed between the first and second alignment layers. The nano-particles are disposed on a surface of one of the first and second alignment layers, and located between the one of the first and second alignment layers and the cholesteric liquid crystal layer.

In the LCD prior art for glazing applications, the liquid crystal is dispersed in a polymer matrix and sandwiched between plastic sheets. The prior art provides two types of technical approach to dispersing the liquid crystal in a polymer matrix: the first are devices generally described as polymer dispersed (e.g., the applicant's EP2176377), and the second are devices that microencapsulate (synonymous with encapsulate) the liquid crystal (e.g., the applicant's PCT/EP2013/051016). Both provide containment for the liquid crystal fluid so that instead of the substrates sandwiching a continuous fluid phase, the substrates sandwich discrete bodies (volumes) of fluid (i.e. the fluid phase is discontinuous) surrounded by a transparent, continuous polymer matrix that spans between the substrates to provide a solid, liquid crystal film.

A problem arises when liquid crystal is dispersed as a discontinuous phase in a continuous polymer matrix because liquid crystal is birefringent. In the transparent state (synonymous with field ON state) a see-through, display device for use in window/glazing applications must be transparent to specular light over a wide range of viewing angles. In particular its inherent haze must remain acceptably low as viewing angle increases. Yet, as is known with prior art polymer dispersed, liquid crystal devices, haze increases with viewing angle due to the increasing refractive index mismatch between the polymer matrix and the birefringent liquid crystal; assuming that the polymer matrix is matched to the ordinary refractive index of the liquid crystal then as the viewing angle to the display normal increases the resulting refractive index for the liquid crystal in the transparent state comprises an increasing fraction of the extraordinary refractive index, and so mismatch and consequently haze increases with increasing viewing angle.

The requirement for clear, haze-free viewing over as extensive a range of viewing angles as possible is extremely important for window applications. A person standing directly in front of a 2M x 2M window will encounter a range of viewing angles depending on the viewer's distance from the window and on which part of the window is being looked through. If the viewer's eye is 2 meters away from the centre of the window, for example, the angle to the corner of the window is about 35 degrees; in other words, for such a window to be transparent at a distance of 2 meters, it requires a haze-free viewing angle of 35 degrees. For the same window to be transparent from a distance of 1 meter, however, increases the required haze-free viewing angle to about 55 degrees.

In the applicant's EP 2176377, the method to minimize haze in the transparent state of a polymer dispersed liquid crystal film was to maximize the mean volume of discrete, liquid crystal volumes thereby minimizing the interface area between chiral nematic liquid crystal and the surrounding polymer matrix; it will be appreciated that if the electro-optical layer comprised just liquid crystal then the transparent state would be free of haze for all viewing angles. In the device of EP2176377 the maximum discrete, liquid crystal volume was limited by its OFF state (synonymous with no applied electrical field). The OFF state used stabilized (i.e. over time) polydomain (synonymous with focal conic) texture to scatter light sufficiently to be translucent and imposed an upper limit on the dimension of the major axis of a discrete liquid crystal volume beyond which the polydomain texture was no longer stable.

It is important to note that the polydomain state in chiral nematic liquid crystal represents a limiting factor because unless it is stabilized by specific means it is not stable over time and transitions to a weak, semi-transparent state within seconds to hours of removing an electrical field. For example, in the applicant's EP2176377 the method uses a molecular structure at the polymer interface to influence liquid crystal molecules to take on an alignment that diverges from the plane of the polymer surface and thereby causes (or reinforces) divergent alignment between domains within the polydomain texture. In US 5,455,083 the method to stabilize a polydomain state in a polymer dispersed film is to add chiral smectic C liquid crystal (i.e. a different liquid crystal phase) to cholesteric liquid crystal. In US5,437,811 and US 6,203,723 polymer network is used to stabilize a polydomain/focal conic state by forming fibrous network within the liquid crystal phase (known as polymer stabilized cholesteric texture (PSCT) devices) to physically disrupt domains. In US 6,767,480 novel materials are dispersed within the cholesteric liquid crystal to stabilize the polydomain state.

In summary, while the light scattering, polydomain / focal conic state of prior art devices can be stable over time, the technical approaches used impose undesirable limitations on the discrete volume that can be stabilized, or introduce undesirable elements such as polymer network or additives into a discrete liquid crystal volume that can compromise the transparent state (i.e. the field ON state). Hence, there is a need for a light scattering state (i.e. the field OFF state) that is stable over time and that does not introduce elements that compromise the transparent state. There is also a need for a liquid crystal film that avoids or minimizes any increase in haze with viewing angle.

In general, the meaning given to liquid crystal terms is consistent with the prior art:
- A liquid crystal molecule aligns to a surface and also aligns to an electrical field.
- A liquid crystal director is the preferred local orientation (i.e. alignment) of liquid crystal molecules, and individual molecules can be at different angles to the director.
- Chiral nematic liquid crystal is synonymous with cholesteric liquid crystal.
- Chiral nematic liquid crystal exhibits a helical structure in that the liquid crystal director is uniformly rotated or twisted perpendicular to the axis of a helix. The pitch is the distance for one full liquid crystal director rotation. The helical structure is spontaneous (i.e. it is a low energy state).
- A disclination represents an extremely small region at the interface between (or within) otherwise well-defined director regions where the director changes abruptly and is really undefined as it points in many directions. A disclination therefore represents a defect and can be a point or line defect.
- A domain in chiral nematic liquid crystal is defined as a region or volume that is free of disclinations or defects.
- Planar alignment, synonymous with homogeneous alignment, is the state of alignment where liquid crystal molecules align parallel to a substrate.
- Homeotropic alignment is the opposite to planar alignment, and the liquid crystal molecules align perpendicular to the substrate.
- Liquid crystal texture is synonymous with morphology.

### Summary of the Invention

According to the invention, there is provided a light shutter according to claim 1.

In embodiments said cell prevents visual access in a first light state by scattering and/or attenuating light and provides access in a second state by transmitting light.

In embodiments said polydomains are anchored to (or by) the surface of said protrusions.

In some embodiments said surface of said liquid crystal layer adjacent said second electrode is non-planar and induces non-planar alignment of said polydomains.

In embodiments said protrusions are in contact with only one substrate.

In embodiments respective liquid crystal molecules within said liquid crystal layer align to the surface of protrusions at a range of angles relative to the second substrate and, between protrusions, align at an angle to a surface co-planar to the second substrate, the latter angle lying outside the former range of angles.

Preferably in embodiments the ratio of the distance between said substrates to said pitch is ≥ 2.0, more preferably, ≥ 3.0, still more preferably ≥ 4.0, and most preferably, ≥ 6.0.

In embodiments the height of said protrusions and/or the cross sectional width at the plane of said second substrate is greater than said chiral nematic liquid crystal pitch.

In embodiments the ratio of one or more of the centre-to-centre distance, the height, or the cross sectional width of protrusions to the liquid crystal pitch is ≥ 6.0.

Embodiments minimize haze by minimizing the total surface area between the liquid crystal and adjacent surfaces that act as discontinuities for light passing through the embodiment in the second light state. Advantageously, the low increase in haze with viewing angle provided by embodiments, or negligible increase with some embodiments, is particularly attractive for insulated glass unit applications. Direct sunlight shining on the face of an insulated glass unit (IGU) embodiment is substantially transmitted as specular light with a low level (or negligible level) forward scattered (i.e. light scattered by the IGU embodiment transmitted to an inside environment where a viewer could perceive it as haze).

In embodiments said protrusions are optically-transparent polymer that is refractive index matched to the ordinary refractive index of said liquid crystal, preferably within 0.01 of each other, more preferably within 0.005, and most preferably within 0.002.

In some embodiments said protrusions are part of a continuous, non-planar, polymer structure on said second substrate.

In some embodiments the alignment of the majority of molecules of said liquid crystal at the surface of said layer adjacent said second substrate is at an angle (or tilt) to the local plane of the surface. Preferably the angle to the local surface plane is greater than or equal to 10 degrees, and more preferably, greater than or equal to 20 degrees, and most preferably, greater than or equal to 25 degrees.

Preferably in embodiments said majority of liquid crystal molecules aligned to the surface of said second substrate have a range of alignment angles to the local surface plane showing divergent alignment.

In alternative embodiments said majority of liquid crystal molecules at said second substrate have a common alignment angle of 90 degrees showing homeotropic alignment. Preferably said homeotropic alignment is to an alignment layer on the surface of said second substrate covering both said protrusions and the area between protrusions.

In other embodiments alignment of said liquid crystal molecules at said second substrate includes two or more alignment types and has a different alignment to the surface of protrusions to the alignment to the surface of the area between said protrusions. In these embodiments preferably the alignment to the surface of protrusions is planar or tilted at an angle and to the surface between said protrusions it is homeotropic.

In embodiments said first electrode provides a planar surface in contact with said layer and the alignment of molecules of said liquid crystal to the surface is homeotropic. Preferably said homeotropic alignment is to an alignment layer on the planar surface of said first substrate.

In embodiments where said first light state is light scattering said cell appears translucent.

In embodiments where said first light state is light attenuating, dichroic dye or luminescent, dichroic dye is solubilized in said chiral nematic liquid crystal to attenuate visible light and said cell is free of a polarizer layer.

In some embodiments said cell has light states intermediate said first and second light states. Preferably the number of intermediate light states is sufficient to provide variable specular light transmittance or variable light attenuation.

In some embodiments said protrusions are microstructures and include regular and irregular geometric shapes having contoured or planar faces, or, quasi-random or algorithm generated shapes. Preferably said protrusions are spherical caps, cylinders, or raised dots, or a mix of two or more of these.

In embodiments protrusions are distributed on said second substrate with two or more of said centre-to-centre distances defining the spacing between neighbouring protrusions, and more preferably a distribution of distances to provide quasi-random placement of protrusions. Preferably the maximum centre-to-centre distance does not exceed 250 microns to avoid a perceivable optical defect, and more preferably does not exceed 150 microns.

In embodiments protrusions have a distribution of heights and/or cross sectional widths.

In some embodiments some protrusions in a cell can possess differences (from other protrusions), the differences including one or more of: surface shape, cross-sectional area, cross-sectional geometric form, or orientation.

In some embodiments the surfaces of protrusions are either parallel or orthogonal to the second substrate.

In some embodiments the total cross sectional area of the protrusions at the plane of the second substrate as a percentage of the encompassing face area can be from 15% to 60%.

In some embodiments an extended structure on said second substrate is a type of protrusion structure in local areas where there is contact with only one substrate in the cell.

In embodiments polymer elements including protrusions, cavity walls and cell-gap spacers within said cell can be any suitable optically transparent polymer including: non-polar polymer, polar polymer, liquid crystal polymer, hydrophilic polymer, fluorinated polymer, and copolymers of these. Preferably, said polymer elements are crosslinked, and more preferably polymer elements are insoluble in said liquid crystal. Preferably said polymer elements are a moulded or printed structure on said second substrate.

In some embodiments the dielectric constant (i.e. relative permittivity) of the protrusions at 50 hertz matches the dielectric constant of the liquid crystal when the latter is measured parallel to the electric field direction (i.e. eparallel). In these embodiments the ratio of the dielectric constant of the protrusions to the chiral nematic liquid crystal parallel to the field at 50 hertz is from 0.5 to 1.1, more preferably 0.75 to 1.05, still more preferably 0.875 to 1.05, and most preferably 0.925 to 1.0.

In embodiments said liquid crystal cell is divided into a monolayer of cavities and the cavities conform to the contour of said protrusions on one side and the planar surface of said first substrate on another side. The polymer walls of the cavities form a web-like network of walls within said cell at about 25 micron to 250 micron spacing, and provide a mechanically strong cell having bonded top and bottom substrates through the walls and self-sealed liquid crystal volumes in the cavities formed between the walls and substrates. In embodiments a cavity has one or more protrusions.

In embodiments said liquid crystal layer is free of polymerization related components including monomers, initiators, low-molecular weight polymer, and insoluble polymer network or fractions.

In embodiments the liquid crystal device is provided with a distance between said substrates which is operable in the first light state to be strongly light scattering or attenuating sufficiently to block visual access through the device, and in the second light state to be substantially haze-free to the human eye for a range of viewing angles up to 60 degrees or more from the normal to the viewing face.

A glazed structure comprising a pair of transparent load-bearing sheets sandwiching said liquid crystal device. An insulated glass unit (IGU) comprising said glazed structure as the inner pane (i.e. the pane in contact with an inside environment), and preferably said IGU incorporates a low emissivity coating and/or a spectrally selective coating on the one or more faces of its glass sheets.

### Brief Description of the Drawings

Embodiments of the invention will now be described, by way of example, with reference to the accompanying drawings, in which:
Figure 1A shows embodiment 201 in a first light state. Protrusions 114 are hemispherical.
Figure 1B shows a second light state.
Figure 2A shows embodiment 202 in a first light state. Protrusions 115 are spherical caps.
Figure 2B shows a second light state.
Figure 3A shows embodiment 203 in a first light state. Protrusions 116 are cylindrical.
Figure 3B shows a second light state.
Figure 4 shows embodiment 204 in a first light state. Protrusions have a mix of geometric shapes.
Figure 5 shows protrusions in the form of extended structures on non-planar structure 161.
Figure 6A shows embodiment 206 in a first light state. Protrusions 124 are raised dots.
Figure 6B shows a second light state.
Figure 7A shows embodiment 207 in a first light state. It has a homeotropic alignment layer 97.
Figure 7B shows a second light state.
Figure 8 shows film embodiment 202 in a glass laminate embodiment 208 within an insulated glass unit embodiment 209.
Figure 9 shows a graph of haze versus viewing angle for example 1.

### Detailed Description

In embodiments of the present invention a device uses a layer of chiral nematic liquid crystal to control light. In film embodiments the cell is bonded to transparent flexible substrates that each have a transparent, conductive electrode, and an electrical field can be applied across the cell to select a second light state using the conductive electrodes. In window and wall embodiments a film embodiment is laminated to at least one glass pane to form a glass laminate. Insulated glass unit (IGU) embodiments incorporate the glass laminate embodiment as its inner pane in contact with the inside environment.

The invention has particular application as a light control film for use in glazing applications that are capable of switching between transparent and translucent states, or between transparent and light blocking (synonymous with dark or opaque) states, generally known as "switchable windows" or "smart windows" or "dimmable windows". Other embodiments include see-through displays that comprise a matrix of pixels each capable of being selectively operated in a transparent state and a translucent or dark state, for use in applications like shop front windows, or the window of a bus or train. In this document a light shutter can be a light modulator, a light attenuator, a variable specular light transmittance sheet, a variable light absorptance sheet, or a see-through display.

In embodiments a light shutter has a cell comprising first and second substrates that are spaced apart from each other. Sandwiched between the substrates is a layer containing a chiral nematic liquid crystal. On the second substrate there is a monolayer of protrusions projecting into (or in contact with) the liquid crystal layer and forming part of the interface surface with the layer on that side. The cell has two extreme light states as well as light states intermediate these two. In the first light state the absence of an electrical field causes the liquid crystal layer to be strongly light scattering because the chiral nematic liquid crystal forms an effective polydomain texture (synonymous with morphology) that is stabilized by the protrusions to avoid relaxation over time. In this way the device prevents visual access through the cell in the first light state (i.e., no electrical field).

In the second light state an electrical field is applied between transparent electrodes on the substrates to cause the liquid crystal layer to be strongly aligned in one axis, either parallel or perpendicular to the electrical field direction. Preferably, the liquid crystal molecules align in the same direction or axis as the electrical field and perpendicular to the electrodes on the substrates. In this way the cell transmits specular light and provides visual access through the device in the second light state.

In the absence of an electrical field, liquid crystal molecules in chiral nematic liquid crystal form helical structures having the same pitch (i.e. the distance for one full liquid crystal director rotation). In embodiments the pitch has a relationship with the cell gap distance (i.e. the distance between the substrates) and with one or more dimensions of the protrusions. In embodiments the pitch of the chiral nematic liquid crystal is selected to be less than the cell gap distance; and, the centre-to-centre distance (or spacing) between adjacent protrusions (for the majority of protrusions) is greater than the pitch. Preferably, the height of protrusions and/or the cross sectional width at the plane of the second substrate is also greater than the chiral nematic liquid crystal pitch.

The relationship (or scaling) of the cell gap distance and the dimensions of protrusions to the pitch is further exemplified in preferred embodiments where the ratio of the cell gap distance to the chiral nematic liquid crystal pitch is ≥ 2.0, more preferably ≥ 3.0, still more preferably ≥ 4.0, and most preferably ≥ 6.0; and, where the ratio of one or more of the centre-to-centre distance, the height, or the cross sectional width of protrusions to the pitch is ≥ 2.0, more preferably ≥ 4.0, and most preferably ≥ 6.0.

The pitch is selected by adding one or more chiral dopants to nematic liquid crystal. Another aspect of the chiral nematic liquid crystal having an effect on the first light state is its birefringence. In embodiments the greater the birefringence the stronger the light scattering. The birefringence of the liquid crystal is selected to be greater than or equal to 0.080, more preferably greater than or equal to 1.000, and most preferably greater than or equal to 1.100.

In embodiments haze is minimized by minimizing the total surface area between the liquid crystal and adjacent surfaces that act as discontinuities for light passing through the embodiment in the second light state, and in particular the haze when viewing away from the normal to the face.

Advantageously, the low increase in haze with increasing viewing angle provided by embodiments, or negligible increase with some embodiments, is particularly attractive for insulated glass unit applications. Direct sunlight shining on the face of an IGU embodiment is substantially transmitted as specular light with only a low level (or negligible in some embodiments) forward scattered (i.e. light scattered by the IGU embodiment transmitted to an inside environment where it can be perceived by a viewer as haze).

In embodiments the protrusions have at least two roles, the most important is in stabilizing a strongly light scattering polydomain texture, and the other role is in creating a polydomain texture. The two roles are linked. In a first type of embodiment, the interface surface of the liquid crystal layer adjacent the second substrate is non-planar and the protrusions induce non-planar alignment of the boundaries of domains adjacent the surface. These domains are anchored to the non-planar surface, in particular to the protrusions, and so remain as stable texture overtime. It has been found that by having a non-planar interface surface with protrusions of an appropriate scale (in the same order of magnitude or larger than the chiral nematic liquid crystal pitch) adjacent a chiral nematic liquid crystal layer, that a strongly light scattering polydomain texture can be stabilized. It seems that the non-planar domains anchored to the non-planar surface in turn stabilize or reinforce domains grown following switch-off of the electrical field in the bulk of the layer, and in turn the bulk domains stabilize domains anchored to the planar top substrate. It will be appreciated that the top substrate could also have a non-planar structure though this is not necessary.

In a second type of embodiment, the surface of the liquid crystal layer adjacent the second substrate induces domains due to differences in the alignment of liquid crystal molecules within the layer to local surfaces of the second substrate. The alignment of molecules adjacent the planar surface between protrusions (i.e. the interstices) is different to the alignment to the surface of protrusions. In some embodiments respective liquid crystal molecules within the liquid crystal layer align to the surface of protrusions at a range of angles relative to the second substrate and, between protrusions, align at an angle to a surface co-planar to the second substrate, the latter angle lying outside the former range of angles. In other embodiments the surface aligning property of the surface between protrusions is different to the surface of protrusions. Preferably the alignment of liquid crystal molecules adjacent the surface of protrusions is planar or tilted at an angle to the local surface plane and the alignment to the surface between protrusions is homeotropic.

It will be appreciated that liquid crystal molecules that align with a given angle to a local surface plane (i.e. the local liquid crystal director) determine the angle of the helical axis associated with that local surface because the helical axis is perpendicular to the liquid crystal director. In some of the embodiments shown in the figures, the local surface is curved and it follows that the liquid crystal director follows the same curvature and the lamellar layers of the chiral nematic liquid crystal follow the curvature. Background information on the lamellar structure of domains in chiral nematic liquid crystal can be found in the applicant's European publication no. EP2617795.

Similar to the first type of embodiment, in the second type the domains are anchored to the surface of the second substrate, in particular to the protrusions, and so remain as stable texture overtime. It has been found that by having a difference between the alignment of liquid crystal molecules to the planar surface between protrusions when compared to the alignment to the surface of protrusions, that a strongly light scattering polydomain texture can be stabilized. It will be appreciated that some of the embodiments described in the figures combine the polydomain stabilizing effects of a non-planar surface on the second substrate (i.e. first type) with the stabilizing effects of alignment differences between the surface of protrusions and the surface of the area between protrusions (i.e. second type).

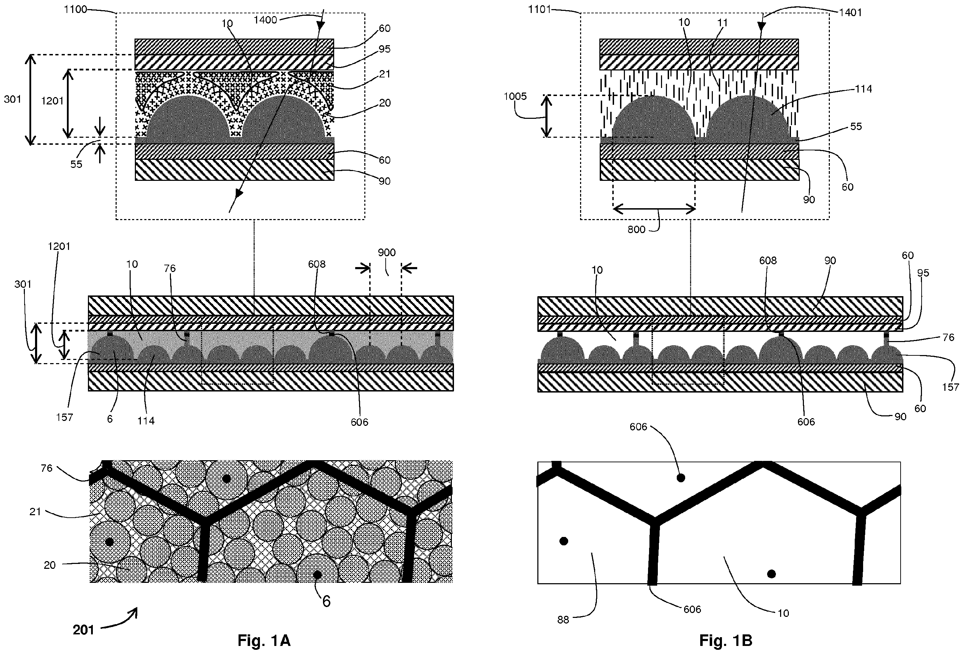

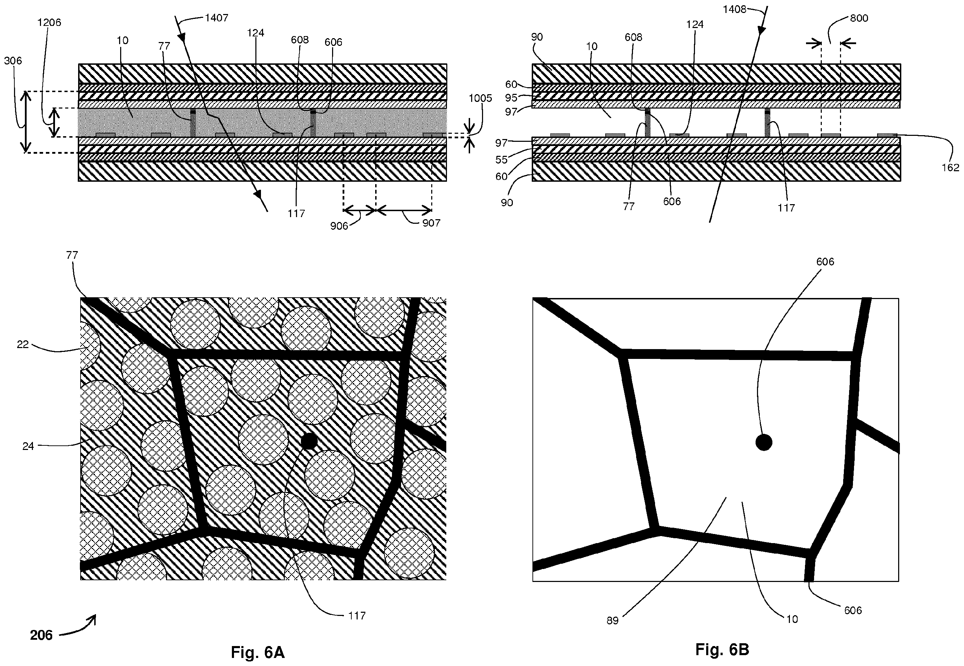

In embodiments a protrusion is in contact with only one substrate, otherwise, if in contact with both, then the contact area would be inactive (i.e. no overlapping liquid crystal). The embodiments shown in the figures have protrusions on one substrate only, but it will be appreciated that protrusions can be on both substrates. Protrusions are microstructures and can include regular and irregular geometric shapes having contoured or planar faces, or, quasi-random or algorithm generated shapes. Figures 1 to 3 show protrusions that are hemispheres, spherical caps, and cylinders respectively. Protrusions can be oblate or otherwise distorted versions of geometric shapes. Other suitable protrusions include fibre-like structures and grid-like structures that project into the liquid crystal layer but remain covered by the liquid crystal (i.e. the protrusion part of the structure is in contact with only one substrate). Protrusions can also be raised features such as a raised dot structure. In this case a protrusion that is 'raised' means a local surface proud of at least part of the surrounding planar surface of the substrate such as the dot structure 124 shown in figures 6A and 6B. A raised dot structure would typically have a height less than the chiral nematic liquid crystal pitch and a cross sectional area greater than the pitch. Preferably in embodiments protrusions are spherical caps, cylinders, or raised dots, or a mix of two or more of these.

The elements that comprise the non-planar structure (e.g., 157 in figures 1A and 1B) can be any optically transparent solid material. For example, the elements can be a non-polar polymer, a polar polymer, or a liquid crystal polymer, or copolymers of these. The polymer can be thermoplastic or thermosetting. Preferably, the polymer elements in a cell are crosslinked and are insoluble in the chiral nematic liquid crystal over the operating temperature range of the device. In embodiments the protrusions, cell walls, and spacers are refractive index matched to the ordinary refractive index of the chiral nematic liquid crystal, preferably within 0.01 of each other, more preferably within 0.005, and most preferably within 0.002. In a subsequent paragraph the dielectric properties of polymers for use in some embodiments are described.

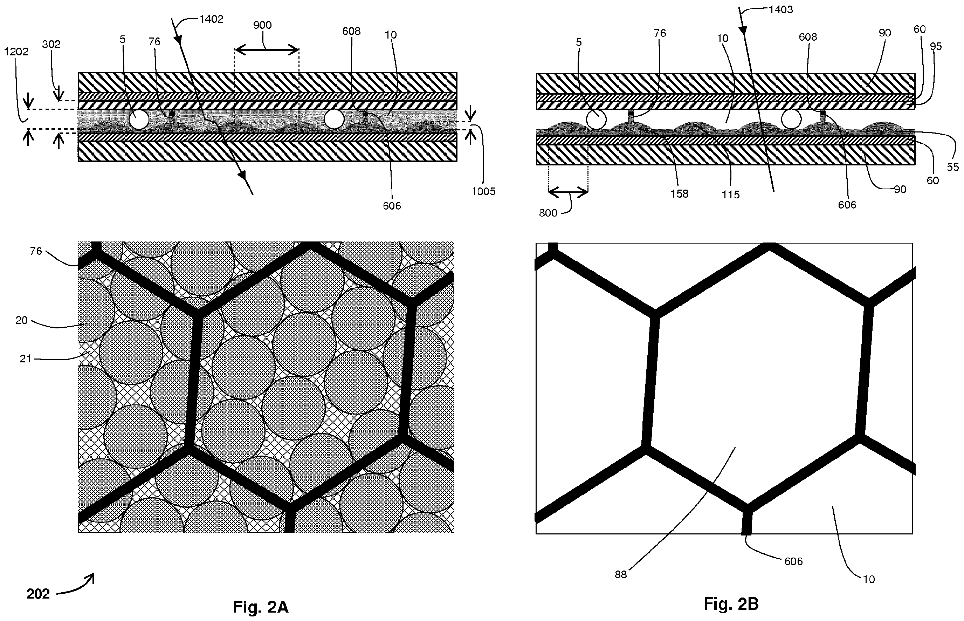

In embodiments the non-planar structure, or the elements that comprise that structure, can be formed on the second substrate's electrode by any suitable method including moulding, embossing or photolithography and moulding is preferred as described later. In some embodiments an insulating layer 55 can be coated separately and be similar to an insulating layer 95 disposed on an opposite side of the cell. In these embodiments the protrusions and/or other elements can be subsequently moulded onto the surface of layer 55. Similarly, cell gap spacers can be a separate element and can be conventional spherical spacers as shown in figures 2A and 2B.

The figures show embodiments in two views: one view shows a cross section of an embodiment's liquid crystal cell, and the other view is of a face of an embodiment and can be a front or rear face unless otherwise indicated. Some exploded views are also shown within figures and these are indicated with a number. Note that cross section views are for illustrative purposes and do not necessarily represent a section along any straight line through the corresponding face view. In addition, a figure having a letter denominator represents an embodiment in a specific light state and each letter denominated figure (for a given figure number) is of the same embodiment, just different light states. For example, figures 1A and 1B are of the same embodiment 201 in different light states. The different elements in the liquid crystal cells of embodiments are drawn in the figures with a line at their surface or border (i.e. at interfaces) even though no such line exists at the interface between refractive-index-matched, transparent materials.

Embodiment 201 is shown in figure 1A in a first light state and represents a strongly light scattering polydomain texture in the chiral nematic liquid crystal layer 1201. Figure 1B shows a second light state and represents a strongly field aligned texture. In figures 1A and 1B embodiment 201 has chiral nematic liquid crystal fluid 10 in liquid crystal cell 301. The latter is indicated by an arrow in figure 1A and in embodiments includes all of the elements sandwiched between top and bottom electrodes 60. Chiral nematic liquid crystal layer 1201 is adjacent to an insulating layer 95 on transparent electrode 60 on top substrate 90 on one side and adjacent a non-planar, structure 157 on the other side. The latter comprises a monolayer of hemispherical protrusions 114 on an insulating layer 55 interspersed with hemispherical spacers 6 and cavity walls 76. As shown in figures 1A and 1B the elements that comprise the non-planar structure on the bottom electrode 60 can be moulded as a continuous, non-planar structure 157.

In the embodiments shown in the figures the pitch of the chiral nematic liquid crystal is selected to be less than the cell gap distance (i.e. the distance between the substrates). The pitch is selected to be in the range 0.78 to 20 microns in accord with the cell gap distance and the ratios given earlier. In embodiments the cell gap distance is the maximum thickness of the liquid crystal layer between the substrates and corresponds to layer 1201 in figures 1A (see exploded view 1100). The cell gap distance is selected using cell gap spacers and walls. It is in the range 5 to 50 microns and is most effective from 10 to 35 micron. For example, an embodiment can have a cell gap distance of 20 microns and a chiral nematic liquid crystal pitch of 1.25 microns. The cell-gap spacers ensure that chiral nematic liquid crystal surrounds or engulfs the protruding surface of protrusions in the liquid crystal layer.

As the dimensions of protrusions are scaled in relation to the chiral nematic liquid crystal pitch, it is desirable to keep the pitch small (in the range 1 to 3 microns) to maximize the ratio of the mean centre-to-centre distance (or spacing) between adjacent protrusions, the mean height of protrusions, and the mean cross sectional width of protrusions to the pitch. In embodiment 201 (figures 1A and 1B) the monolayer of hemispherical protrusions 114 can be described as having random close packing. Protrusions 114 have a diameter 800, corresponding to a cross sectional width at the second substrate, in the range 20 to 80 microns. If the chiral nematic liquid crystal pitch is 1.25 microns then the range is from 16 x pitch to 64 x pitch. The centre-to-centre distance 900 between adjacent protrusions 114 is greater than or equal to the diameter 800. The height 1005 of protrusions 114 is half the diameter 800. This shows that in embodiment 201 all three dimensions of protrusion (i.e. centre-to-centre distance, height, and cross sectional width) are generally an order of magnitude greater than the chiral nematic liquid crystal pitch.

In figure 1A the chiral nematic liquid crystal layer 1201 is in the polydomain state and strongly scatters light as it passes through the cell. Light ray 1400 in exploded view 1100 is refracted both within domains and at the interface between domains. Light is refracted within domains by the lamellar-like ordering of the helical layers and the applicant's European publication no. EP2617795 provides more background information in this regard. Exploded view 1100 and the face view show domains of type 20 and 21. Type 20 is a domain aligned to, and anchored by, the surface of protrusions 114 whereas domain 21 is aligned to, and anchored by, the surface of the insulating layer 95. Domains in the bulk of the liquid crystal layer 1201 are not shown, and domains in the area between protrusions (i.e. the interstices) are not shown. Figure 1A and following figures show a simplified representation of the polydomain texture. Under a microscope between crossed polarizers, the boundaries of domains appear far more irregular. Another simplification used in the figures is that each protrusion corresponds to a single liquid crystal domain. Defects on the surface of protrusions typically lead to a protrusion anchoring more than one domain.

In embodiment 201 the interface surface of the liquid crystal layer 1201 adjacent the bottom substrate follows the contour of the protrusions 114 and consequently is non-planar. The domains 20 formed at this interface surface are in turn non-planar. The domains 20 are anchored to the protrusions 114 on the non-planar surface 157 and remain as stable texture overtime. In embodiment 201 the non-planar structure 157 aligns liquid crystal molecules with planar alignment to its various interface surfaces as is typically provided by most polymer types. In this case liquid crystal molecules within a domain 20 have a significantly different angle to a plane parallel to the substrates when compared to liquid crystal molecules within a domain 21, and this difference further stabilizes the different domains.

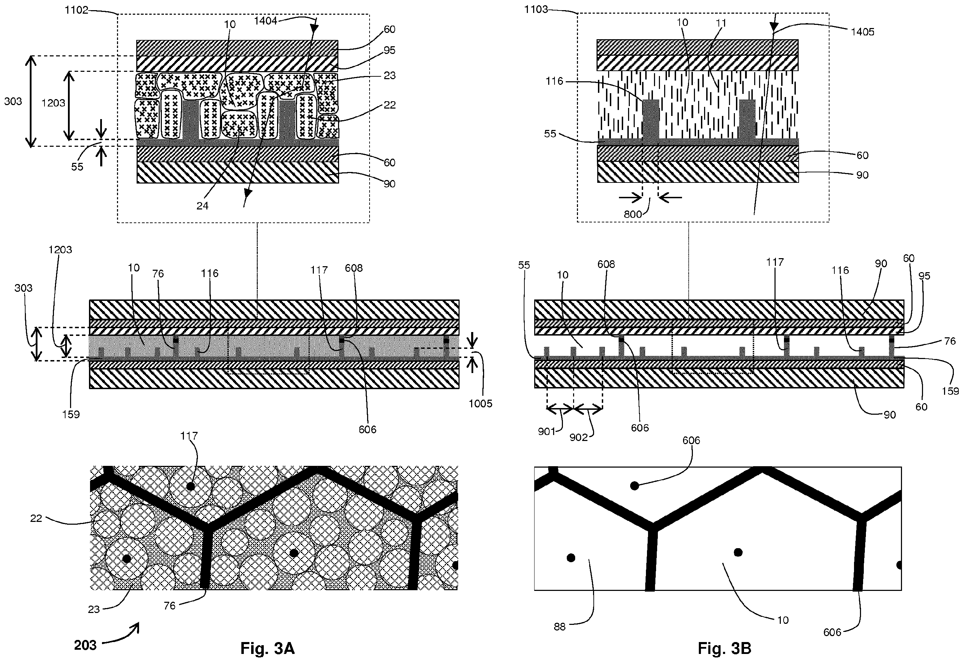

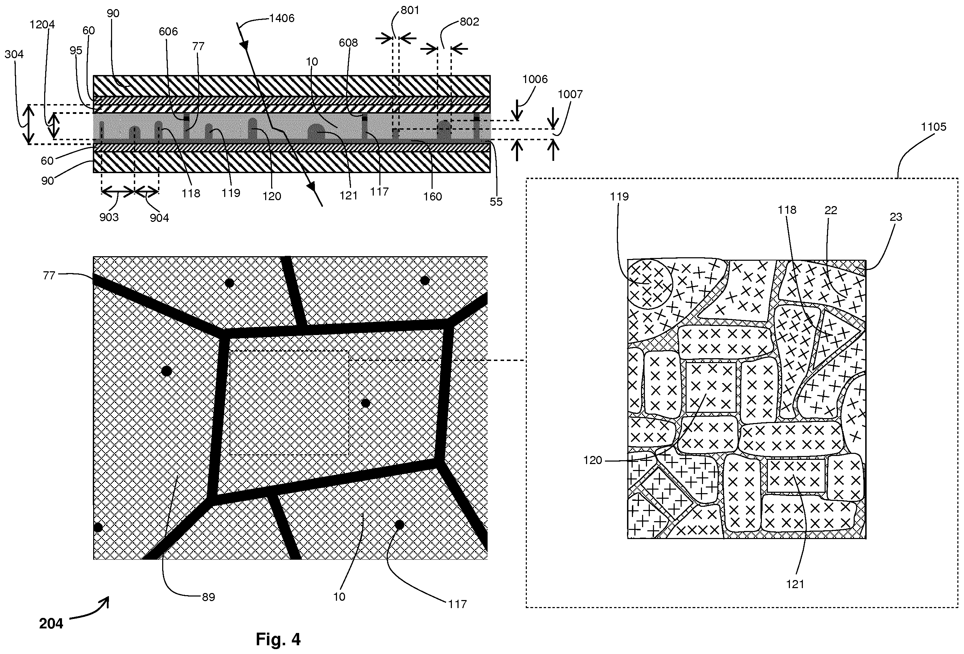

In the embodiments shown in the figures the liquid crystal layer (1201 in figure 1A) is divided into a monolayer of discrete or semi-discrete cavities 88 by polymer walls 76. There are one or more protrusions in a cavity, and typically embodiments can have 10 or more. A wall 76 can follow the surface profile of protrusions along its path as is the case with embodiment 201 in figures 1A and 1B, or the wall area can exclude protrusions as shown in embodiment 203 in figures 3A and 3B. The cavities 88 conform to the contour of the protrusions on one side and the planar surface adjacent the first substrate on the other side. The polymer walls of the cavities form a web-like network of walls within the cell at about 25 micron to 250 micron spacing and have a wall width of about 5 micron to 50 micron. For example, the wall width can be 10 microns and the spacing (or distance) between opposite walls of a cavity, 175 micron. The walls can be in any suitable grid shape, a hexagonal grid is shown in figures 2A and 2B and a quasi-randomized grid structure is shown in figure 4.

The walls adhere to the insulating layers on both substrates (or one or both electrodes) and provide a mechanically strong cell having peel adhesion. In addition, the cavities 88 self-seal the liquid crystal 10 in the volume between the walls and substrates. This allows an embodiment with flexible substrates to be cut to size from a larger area such as from a roll of chiral nematic liquid crystal film. In some embodiments the optically transparent walls (as well as coplanar surfaces of any spacers) are overprinted with a black mask 606 and a curable adhesive 608. By printing or coating a black mask 606, as shown in the cross section view in figure 1A and the face view of figure 1B, the inactive wall area does not transmit specular light in the first light state. By keeping the cavity size below the resolution of the eye the black mask cannot be perceived by the eye analogous to the black masks used in active matrix displays. In alternative embodiments there is no black mask and the wall width is kept to a minimum to minimize specular light transmitted by the wall area in the first light state.

For convenience the figures show the walls with a black mask to differentiate this area in the face view. The curable adhesive 608 is preferably not soluble in the liquid crystal but refractive index matches the liquid crystal (i.e. matches nₒ) and cures to a solid optically transparent polymer bonded to an insulating layer (or electrode) on one side and the walls 76 on the other.

Optionally cell gap spacers can also be bonded to both substrates similar to the walls and this is shown in figures 1A and 1B. The contact area with the top substrate can be overprinted with black mask 606 and curable adhesive 608, or just with adhesive 608.

Figure 1B together with exploded view 1101 show the second light state of embodiment 201. In the presence of a strong electrical field liquid crystal molecules 11 align with a common identifiable alignment in one axis and that axis is in the direction of the field. Incident light ray 1401 is transmitted as specular light through the cell. The connection of a signal generator and a suitable AC signal are not shown in the figures but these are known in the prior art of liquid crystal films for glazing applications.

In the second light state (i.e. the transparent state) embodiment 201 transmits specular light through its liquid crystal cell 301 substantially free of haze when the ordinary refractive index of the chiral nematic liquid crystal 10 matches the refractive index of the protrusions 114. In some embodiments the effective refractive index of the liquid crystal measured at some angle to the normal of the cell face is used for matching purposes to maximize the range of haze-free viewing angles. For example, the effective refractive index at an angle of 30 degrees could be the matching value for the protrusions if the cell appearance at normal viewing remains haze-free.

In some embodiments the liquid crystal molecules 11 have a uniform electrical field in a chiral nematic liquid crystal cell 301. In these embodiments the dielectric constant (i.e. relative permittivity) of the protrusions at 50 hertz matches the dielectric constant of the liquid crystal when the latter is measured parallel to the electric field direction (i.e. εₚₐᵣₐₗₗₑₗ). Similarly, the other elements of the non-planar structure including polymer walls 76 and spacers 6 (in figures 1A and 1B) are matched. In embodiments the ratio of the dielectric constant of the protrusions to the chiral nematic liquid crystal parallel to the field at 50 hertz is from 0.5 to 1.1, more preferably 0.75 to 1.05, still more preferably 0.875 to 1.05, and most preferably 0.925 to 1.0. Similarly, the dielectric constant of the wall 76 and cell gap spacers can be matched to the liquid crystal.

Polymer materials having a high dielectric constant suitable for matching to the liquid crystal include hydrophilic polymers, fluorinated polymers, polar polymers, liquid crystal polymers, non-polar polymers, and copolymers of these. In some embodiments the polymer is plasticized to enhance the dielectric constant match. For example, the polymer can have dispersed nematic liquid crystal by solubilizing the liquid crystal in the prepolymer at a sufficiently low level to avoid forming droplets of liquid crystal in the subsequent polymer. In another example of a plasticizer a highly polar fluid such as a low-molecular-weight polyethylene glycol can be dispersed in a hydrophilic polymer. In other embodiments nanometre-scale, high-dielectric-constant, filler material is dispersed in the previously listed polymers to enhance the dielectric constant match. In still other embodiments the polymer is doped with impurities to enhance the dielectric constant match. Suitable non-polar polymers include polymers having an ethylene glycol moiety such as polyethylene glycol methyl ether acrylate or crosslinker PEGDMA. Suitable polar polymers include polymers having a nitrogen containing moiety including poly(dimethylamino)ethyl methacrylate, or a moiety having the groups hydroxyl or a halogen.

It will be appreciated that an embodiment can be operated to have one or more intermediate light states and to provide a variable specular light transmittance function by varying the voltage amplitude of the AC driving signal. Preferably the number of intermediate light states is sufficient to provide variable specular light transmittance or variable light attenuation.

The substrates 90 can be any suitable transparent sheet material such as glass or polymer and can be rigid or flexible. For example, a substrate can use float glass, or heat treated float glass, or polished glass, or tinted/coloured glass, or heat absorbing/reflecting glass, or flexible glass (e.g., 50 micron or 100 micron glass from Nippon Electric Glass Co. Ltd.), or an active matrix glass, or a polymer such as PET (i.e. polyethylene terephthalate), PEN (i.e. polyethylene napthalate), PES (i.e. polyether sulfone), PC (i.e. polycarbonate), PI (i.e. polyimide), or FRP (i.e. fiber reinforced plastic).

Electrodes 60 are any suitable transparent conductor. For example, ITO (i.e. indium tin oxide), carbon nanotubes, silver nanowires, or a conductive polymer such as PEDOT (i.e. poly(ethylenedioxythiophene). Silver nanowires or PEDOT can be printed or coated as a conductive ink onto a substrate. A top electrode 60 can be one type such as ITO and a bottom electrode 60 another type such as silver nanowires. Silver nanowires suspensions/dispersions (i.e. in a carrier fluid) are available from Cambrios Technology Inc. or Seashell Technology (www.seashelltech.com). Silver nanowires coated PET substrates are available from Toray Advanced Film Co. Ltd (JP), and ITO coated PET substrates (e.g., Flexvue OC series) are available from Eastman Inc. (see www.flexvuefilms.com).

In embodiments the sheet resistivity of an electrode (e.g., ITO or silver nanowires) must be sufficiently low to apply driving waveforms without significant signal distortion: preferably 250 ohms square or less, more preferably 200 ohms square or less, and most preferably 150 ohms square or less. Colour-neutral, transparent electrodes are preferred for embodiments that require high optical quality (i.e. avoidance of the slight colour tint characteristic of ITO films and/or having maximum visible light transmission). For example, the Flexvue range of ITO electrode from Eastman Inc, or silver nanowires. In some embodiments the substrate can have one or more anti-reflection layers to minimize reflections from an ITO electrode layer.

Insulating layer 95 is optional and can be any suitable transparent dielectric such as a polymer layer, an adhesive layer, a silicon oxide layer (i.e. SiOx) or a nitride layer, or MgF2, or CaF2. Optional layer 95 prevents electrical contact between chiral nematic liquid crystal 10 and an electrode 60.

The light states in subsequent embodiments are constructed similar to that described for embodiment 201 in figures 1A and 1B. Consequently, the description of each subsequent embodiment will describe aspects that are different to previous embodiments.

Embodiment 202 is shown in figure 2A in a first light state and represents a strongly light scattering polydomain texture in the chiral nematic liquid crystal layer 1202 of cell 302. Light ray 1402 is refracted both within domains 20 and 21 and at the interface between domains. Layer 1202 is adjacent a non-planar, structure 158 on the bottom substrate 90. Structure 158 comprises a monolayer of spherical-cap protrusions 115 on an insulating layer 55 interspersed with cavity walls 76 and can be moulded as a continuous structure. The cell gap distance corresponds to the thickness of the liquid crystal layer 1202 and is set by discrete spherical spacers 5 and walls 76.

In embodiment 202 protrusions 115 have a cross sectional width 800 at the second substrate in the range 40 to 125 microns. The centre-to-centre distance 900 between adjacent protrusions 115 is shown greater than the width 800 but in some embodiments the spherical caps can be close packed. The height 1005 of protrusions 115 is about 0.75 to 0.25 times the cell gap distance. In embodiment 202 the three dimensions of protrusions (i.e. centre-to-centre distance, height, and cross sectional width) are generally an order of magnitude greater than the liquid crystal pitch.

Similar to embodiment 201 shown in figure 1A, domains 20 are aligned to, and anchored by, the surface of protrusions 115 whereas domains 21 are aligned to, and anchored by, the surface of the insulating layer 95. In figure 2A domains 20 are shown as having spread to meet domains on adjacent protrusions, however, this is not the case when protrusions are spaced apart. In the latter case the area between protrusions (i.e. the interstices) also forms domains anchored to its planar surface (this is not shown in figure 2A).

In embodiment 202 the interface surface of the liquid crystal layer 1202 with the bottom substrate is non-planar. Domains 20 are anchored to the protrusions 115 with planar alignment and remain as stable texture overtime. Liquid crystal molecules within a domain 20 have a significantly different angle to a plane parallel to the substrates when compared to liquid crystal molecules within a domain 21, and this difference further stabilizes the different domains.

Figure 2B shows the second light state of embodiment 202. In the presence of a strong electrical field liquid crystal molecules 11 align with a common identifiable alignment in one axis and incident light ray 1403 is transmitted as specular light through the cell.

Embodiment 203 is shown in figure 3A in a first light state and represents a strongly light scattering polydomain texture in the chiral nematic liquid crystal layer 1203 of cell 303. Light ray 1404 in exploded view 1102 is refracted both within domains 22, 23 and 24 and at the interface between domains. Layer 1203 is adjacent a non-planar, structure 159 on the bottom substrate 90. Structure 159 comprises a monolayer of cylindrical protrusions 116 on an insulating layer 55 interspersed with cavity walls 76 and cylindrical shaped spacers 117. Cylindrical protrusions can also be described as pillars, columns, or posts. The cell gap distance corresponds to the thickness of the liquid crystal layer 1203 and is set by spacers 117 and walls 76. In the face view the spacers 117 are shown as one or more black dots within cavities 88 because they have a black mask 606 on their top surface.

In embodiment 203 protrusions 116 have a cross sectional width 800 at the second substrate generally in the range 1 to 50 microns. Cell 303 has more than one centre-to-centre distance between adjacent protrusions as shown by dimensions 901 and 902 in figure 3B, and is shown in figure 3A with a quasi-random placement of protrusions 116 on the layer 55. Unlike in embodiments 201 and 202, the centre-to-centre distance is significantly greater than the width 800, typically being at least three times the width 800. The height 1005 of protrusions 116 is from 0.75 to 0.25 times the cell gap distance. In embodiment 203 at least two of the three dimensions of protrusions (i.e. centre-to-centre distance and the height) are generally an order of magnitude greater than the liquid crystal pitch.

In exploded view 1102 domains 22 are aligned to, and anchored by, a surface of protrusions 116, domains 23 are aligned to, and anchored by, the surface of the insulating layer 95, and domains 24 are aligned to, and anchored by, the surface of layer 55 for part of the area between protrusions. In the polydomain texture the boundaries of adjacent domains limit their extent and immediately following switch-off from the second light state (i.e. the electrical field aligned transparent state) domains spontaneously form (or grow) and impinge or impact with adjacent domains before resolving into a stable texture stabilized by the protrusions. It will be appreciated that exploded view 1102 is a simplified representation of the resolved polydomain texture for embodiment 203.

In embodiment 203 the surfaces of protrusions are either parallel to the substrates or orthogonal to them. It is thought that the orthogonal surface of a protrusion 116 acts as a core or seed for a surrounding domain 22. In a related embodiment the cross-sectional width 800 of protrusions 116 can be less than the chiral nematic liquid crystal pitch and in this case a protrusion could be considered as a defect on the boundary between adjacent domains.

In embodiment 203 the surface of the liquid crystal layer 1203 adjacent the bottom substrate 90 is non-planar because protrusions 116 project into layer 1203 with a height 1005 that is greater that the chiral nematic liquid crystal pitch, and generally an order of magnitude greater. Consequently, the boundaries of domains adjacent the bottom substrate are non-planar and help to stabilize a polydomain texture in liquid crystal layer 1203.

In figure 3A the non-planar structure 159 including protrusions 116 cause divergent alignment of liquid crystal molecules to its local surfaces. Divergent alignment is defined as being where liquid crystal molecules aligned to a local surface have a range of alignment angles to the local surface plane instead of a defined angle as with planar (zero degrees) or homeotropic (90 degrees) alignments. For example, in the applicant's EP2176377 a polymer surface is described where significant substituent groups solubilized in the liquid crystal influence liquid crystal molecules to take on an alignment that diverges (i.e. makes an angle other than zero) from both the plane of the local polymer surface and generally also from each other. For example, the surface of poly(ethylhexyl methacrylate) causes divergent alignment in liquid crystal. Divergent alignment causes (or reinforces) significant differences in the liquid crystal alignment angles (to a plane parallel to the bottom substrate) across the different domains within a polydomain texture and enhances stability of the texture over time.

Figure 3B together with exploded view 1103 show the second light state of embodiment 203. In the presence of a strong electrical field liquid crystal molecules 11 align with a common identifiable alignment in one axis and incident light ray 1405 is transmitted as specular light through the cell. Advantageously embodiment 203 can have significantly less total surface area for protrusions 116 adjacent liquid crystal layer 1203 than the corresponding total for embodiments 202 or 201. By minimizing this surface area embodiments minimize an increase in haze with increasing viewing angle due to mismatch between the resolved refractive index of the liquid crystal for a given viewing angle and the refractive index of a protrusion. It will be appreciated that the liquid crystal is birefringent and protrusions create discontinuities in the field-aligned liquid crystal layer causing localized refraction of light that when occurring across the face of a device can be perceived by a viewer as haze. The parallel, continuous surfaces of the substrates 90, and in turn the electrodes 60 and insulating layers 55 and 95 do not create any increase in haze (negligible) with viewing angle because they do not create a discontinuity within the liquid crystal layer. It follows that in embodiments 203 maximizing the mean centre-to-centre distance of adjacent protrusions while minimizing the cross-sectional width is advantageous in minimizing an increase in haze with increasing viewing angle.

Embodiment 204 is shown in figure 4 in a first light state and represents a strongly light scattering polydomain texture in the chiral nematic liquid crystal layer 1204 of cell 304. Light ray 1406 is refracted both within domains 22, 23 and 24 and at the interface between domains (note, domains 24 are not shown in figure 4 or its exploded view 1105). Layer 1204 is adjacent a non-planar, structure 160 on the bottom substrate 90. Structure 160 comprises a monolayer of a number of different protrusions including 118 to 121 on an insulating layer 55 interspersed with cavity walls 77 and cylindrical shaped spacers 117. The cell gap distance corresponds to the thickness of the liquid crystal layer 1204 and is set by spacers 117 and walls 77.

Embodiment 204 is related to embodiment 203 except all three protrusion dimensions (i.e. centre-to-centre distance, height, and cross-sectional width) have a distribution of values, the cross-sectional shapes of the protrusions have differences, and the tops of protrusions can be domed or planar. Similar to embodiment 203 the sides of protrusions 118 to 121 are orthogonal to the plane of the substrates. In cell 304 more than one centre-to-centre distance between adjacent protrusions is shown by dimensions 903 and 904; more than one height by dimensions 1006 and 1007, and more than one cross-sectional width by dimensions 801 and 802. In related embodiments one or more of the three protrusion dimensions can be quasi random with respect to values within the previously described ranges for each dimension. In other embodiments some protrusions can possess other differences (from each other) including one or more of: surface shape, cross-sectional area, cross-sectional geometric form, or orientation.

In exploded view 1105 domains 22 are aligned to, and anchored by, a surface of protrusions 118 (having a triangular cross section parallel and adjacent to the bottom substrate), protrusions 119 (circular), protrusions 120 (square), and protrusions 121 (rectangular). Domains 23 are aligned to, and anchored by, the surface of layer 95. Domains 24 are not shown, but these are aligned to, and anchored by, part of the surface of layer 55 between protrusions similar to that shown in figure 3A's exploded view 1102 . The greater irregularity of the surface of non-planar structure 160 over structure 159 (see figures 3A) stabilizes a more irregular polydomain texture in layer 1204 than in layer 1203. Similarly, the irregular or quasi-random shapes of cavities 89 and the placement of walls 77 can help stabilize a more irregular polydomain texture. It will be appreciated that exploded view 1105 is a simplified representation of the resolved polydomain texture for embodiment 204.

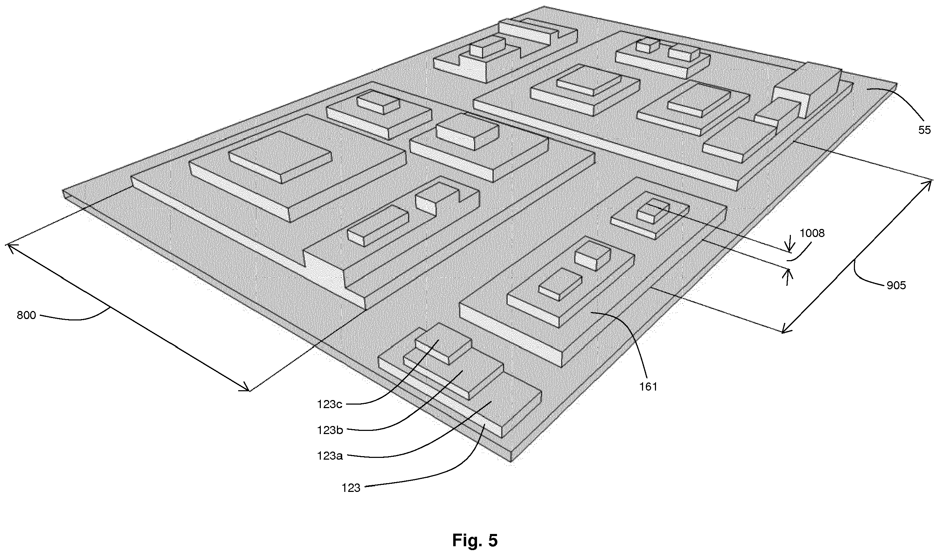

Figure 5 shows a non-planar structure 161 for use in embodiments. Its protrusions are extended structures. For example, protrusion 123 has a stepped surface and surfaces 123a, 123b, and 123c are parallel to its insulating layer 55 (and so the bottom substrate). A centre-to-centre distance for adjacent protrusions is shown as dimension 905, a height is shown as 1008, and a cross-sectional width 800.

Embodiment 206 is shown in figure 6A in a first light state and represents a strongly light scattering polydomain texture in the chiral nematic liquid crystal layer 1206 of cell 306. Light ray 1407 is refracted both within domains 22, 23 and 24 and at the interface between domains. Domain 23 is not shown in the face view of figure 6A but can be thought of as domains anchored to the surface of the top substrate similar to the description of domains 23 relating to the earlier exploded view 1102 shown in figure 3A. Layer 1206 is adjacent a non-planar, structure 162 on the bottom substrate 90. Structure 162 comprises a monolayer of raised-dot protrusions 116 on an insulating layer 55 interspersed with cavity walls 77 and cylindrical shaped spacers 117. In this case a protrusion that is 'raised' means a local surface proud of at least part of the surrounding planar surface of the substrate such as the cylindrical-shaped, dot structure 124 shown in figures 6A and 6B. A raised dot structure would typically have a height 1005 less than the chiral nematic liquid crystal pitch, and in some embodiments its height is greater than or equal to the length of the major axis of the liquid crystal molecules 11. In embodiments the height of protrusions 124 is generally in the range 1 nm to 1,000 nm, and preferably in the range 5 nm to 500 nm, and more preferably in the range 7.5 nm to 300 nm, and most preferred in the range 10 nm to 200 nm.

In embodiment 206 the cell gap distance corresponds to the thickness of the liquid crystal layer 1206 and is set by spacers 117 and walls 77. In the face view the walls 77 have a quasi-random placement to provide quasi-random shaped cavities 89. Protrusions 124 have a cross sectional width 800 at the second substrate generally in the range 5 to 50 microns. Cell 306 has more than one centre-to-centre distance between adjacent protrusions as shown by dimensions 906 and 907, and is shown in figure 6A with a quasi-random placement of protrusions 124 on insulating layer 55. In some embodiments the centre-to-centre distance can be significantly greater than the width 800. In embodiment 206 at least two of the three dimensions of protrusions (i.e. centre-to-centre distance and the width) are generally an order of magnitude greater than the liquid crystal pitch.

Insulating layer 55 has an alignment layer 97 that causes the liquid crystal molecules 11 adjacent its surface to align with homeotropic alignment to the local surface (i.e. align at 90 degrees to the plane of the local surface). In some embodiments the roles of insulating layer 55 and alignment layer 97 are combined in a single layer. In embodiment 206 the liquid crystal layer is adjacent a homeotropic alignment layer 97 on the top substrate also. A polyimide alignment layer is known to provide homeotropic alignment of adjacent liquid crystal molecules. Suitable material for forming a polyimide alignment layer on a substrate is available from a number of suppliers including Nissan Chemical Industries (Japan) and JSR Corporation (Japan). For example, the Sunever polyimide series from Nissan includes SE-1211 or 5661.

In embodiment 206 the alignment of the liquid crystal molecules adjacent the non-planar structure 162 includes two or more alignment types. The first type is the alignment to the surface area between protrusions and in cell 306 this is homeotropic alignment; and the second type is to the surface of protrusions 124 and this is planar alignment. In related embodiments liquid crystal molecules adjacent the second substrate have more than one alignment type across that surface with protrusions providing a different alignment to their surface when compared to the alignment to the surface area between protrusions. Preferably, one of the two types of alignment provides homeotropic alignment. In some embodiments protrusions are polyimide providing homeotropic surface alignment, layer 97 is absent, and the polymer layer 55 provides planar alignment, or the previously described divergent alignment.

In the face view shown in figure 6A liquid crystal molecules adjacent the surface of protrusions 124 align with planar alignment forming domains 22 anchored by protrusions 124. In the space between protrusions liquid crystal molecules adjacent the surface of alignment layer 97 align with homeotropic alignment forming domains 24 anchored to that surface. Similarly, liquid crystal molecules adjacent to the top substrate align with homeotropic alignment to alignment layer 97 forming domains 23 (not shown in figure 6A) anchored to that surface. The face view shown in figure 6A is a simplification, in the polydomain texture the boundaries of adjacent domains limit their extent and immediately following switch-off from the second light state (i.e. the electrical field aligned transparent state) domains spontaneously form (or grow) and impinge or impact with adjacent domains before resolving into a stable texture stabilized by the protrusions.

In embodiment 206 in the first light state the boundaries of the chiral nematic liquid crystal domains adjacent the second substrate are approximately planar (unlike previous embodiments). The dispersed protrusions 124 disrupt the alignment of liquid crystal molecules adjacent the second substrate to provide a different alignment locally, and, as a consequence the polydomain texture in the chiral nematic liquid crystal layer of the liquid crystal cell is strongly light scattering and stable over time.

Figure 6B shows the second light state of embodiment 206. In the presence of a strong electrical field liquid crystal molecules 11 align with a common identifiable alignment in one axis and incident light ray 1408 is transmitted as specular light through the cell. In the most preferred ranges given earlier for the height of protrusions 124 (i.e. 7.5 nm to 300nm and 10 nm to 200nm) the height is significantly less than the wavelength of visible light with the consequence that protrusions 124 do not act as refractive index discontinuities in the liquid crystal layer 1206.

In the most preferred range, protrusions 124 do not cause localized refraction of light that could be perceived by a viewer as haze because the surface of non-planar structure 162 is approximately planar for visible light wavelengths. However, protrusions 124 can cause light diffraction (a much weaker source of light scattering / haze) because they are discretely dispersed (or placed) on the surface of structure 162 with a centre-to-centre distance and width significantly greater than visible light wavelengths. To minimize and/or avoid the perception of haze due to diffraction in this case the refractive index of protrusions 124 are refractive index matched to the ordinary refractive index of the chiral nematic liquid crystal 10 as described for earlier embodiments.

Advantageously embodiment 206 has negligible increase in haze with increasing viewing angle to the normal to its face. As described in the previous paragraph, embodiment 206 can appear to a viewer as being near haze-free (or haze-free) regardless of viewing angle. In this regard appearing haze-free is understood as appearing to have a haze level similar to ITO coated PET substrates.

In embodiment 206 and related embodiments, where the height of protrusions is of the same order of magnitude as the length of the major axis of the liquid crystal molecules (and significantly less than the wavelength of visible light as described earlier), techniques to form the protrusions on the second substrate include micro-contact printing, inkjet printing, and moulding (as described later).

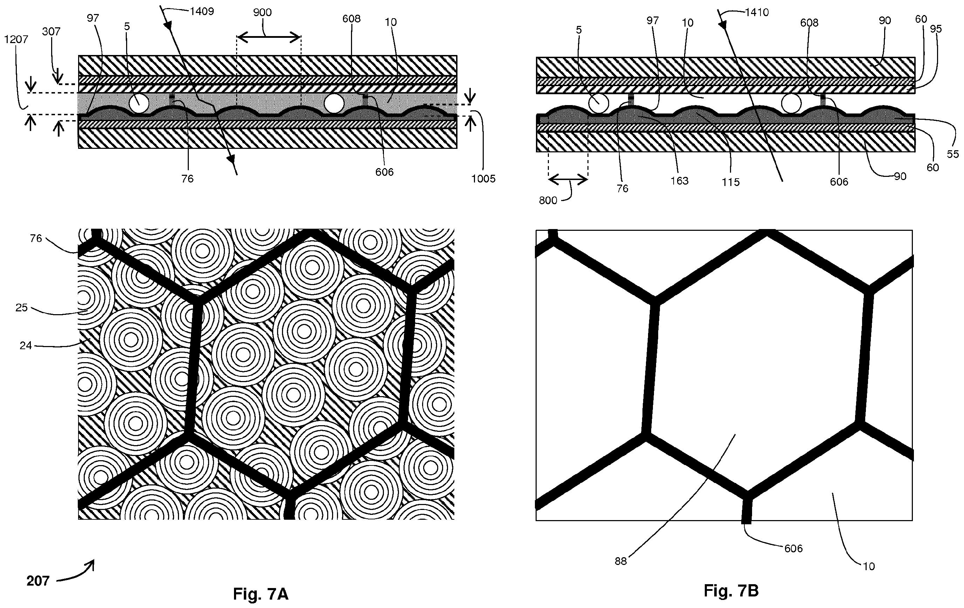

Embodiment 207 is shown in figure 7A in a first light state and represents a strongly light scattering polydomain texture in the chiral nematic liquid crystal layer 1207 of cell 307. Light ray 1409 is refracted both within domains 24 and 25 and at the interface between domains. Layer 1207 is adjacent a non-planar, structure 163 on the bottom substrate 90. Structure 163 comprises a monolayer of spherical-cap protrusions 115 on an insulating layer 55 interspersed with cavity walls 76.

Embodiment 207 is related to embodiment 202 shown in figures 2A and 2B except the surface of non-planar structure 163 is covered with a continuous, optically-transparent, alignment layer 97 (it is shown as a covering black surface in figures 7A and 7B to differentiate it). The majority of liquid crystal molecules adjacent surface 97 on the non-planar structure 163 have a common alignment angle of 90 degrees to the plane of a local surface (i.e. not to the plane of substrate 90) and shows homeotropic alignment. The homeotropic alignment is to an alignment layer 97 as described previously in relation to embodiment 206.

In the face view of figure 7A domains 25 are aligned to, and anchored by, the surface of protrusions 115 and domains 24 are aligned to, and anchored by, the surface of the insulating layer 55 in part of the area between protrusions. In embodiment 207 the helical axes within domains adjacent the non-planar structure 163 generally lie quasi-parallel to the substrates due to the homeotropic alignment of the surface and so the stabilized polydomain texture can appear different to embodiment 202 under a microscope. In the latter case the direction of the helical axes shows greater divergence. The top substrate provides planar alignment in embodiment 207, but in related embodiments the top substrate could provide a surface adjacent the liquid crystal layer with divergent alignment or homeotropic alignment.

Figure 7B shows the second light state of embodiment 207. In the presence of a strong electrical field liquid crystal molecules 11 align with a common identifiable alignment in one axis and incident light ray 1410 is transmitted as specular light through the cell.

In embodiments the total cross sectional area of the protrusions at the plane of the second substrate as a percentage of the encompassing face area is from 10% to 80%, and preferably 12.5% to 66%, and most preferably 15% to 60%. Preferably the maximum centre-to-centre distance of adjacent protrusions does not exceed 250 microns to avoid a perceivable optical defect, and more preferably does not exceed 150 microns.

In some embodiments the different types of protrusions described in the figures can be mixed within a single embodiment. In some embodiments the top substrate can have protrusions similar to that described for the bottom substrate and in addition to also having protrusions on the bottom substrate. For example, in an embodiment related to embodiment 206 the top substrate can also have protrusions 124 dispersed with quasi-random placement.

In some embodiments the alignment of the majority of molecules of the liquid crystal adjacent the second substrate is at an angle (or tilt) to the local plane of the surface. Preferably the angle to the local surface plane is greater than or equal to 10 degrees, and more preferably, greater than or equal to 20 degrees, and most preferably, greater than or equal to 25 degrees. Preferably there is a range of alignment angles to the local surface plane showing divergent alignment.

In embodiments the top substrate can align liquid crystal molecules adjacent its surface with planar, homeotropic, tilted, or divergent alignment. Homeotropic alignment is preferred for the top substrate.

In some embodiments the first light state is light attenuating, and dichroic dye or luminescent, dichroic dye is solubilized in the chiral nematic liquid crystal to attenuate visible light. Unlike conventional LCDs the chiral nematic liquid crystal embodiments do not require a polarizer and analyser to attenuate light. Background information on the use of dichroic dye to attenuate light in chiral nematic liquid crystal can be found in the applicant's European publication number EP2617795. Preferably luminescent dichroic dye emits light outside the visible spectrum in embodiments.

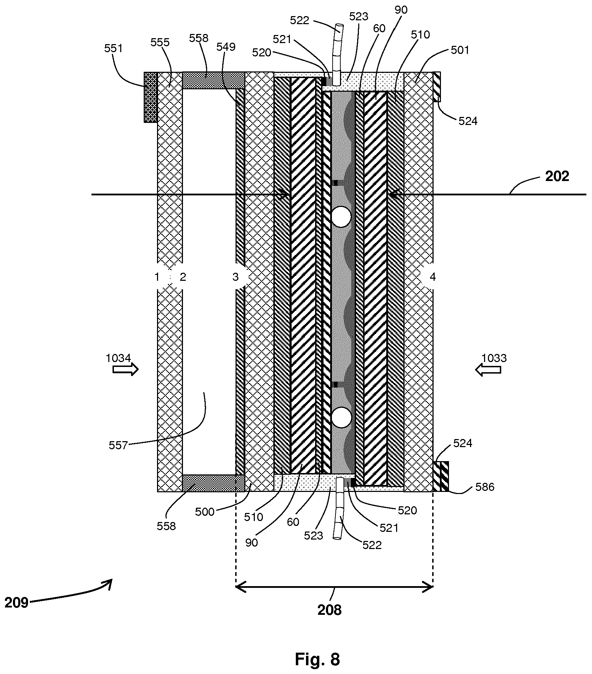

Figure 8 shows the earlier described embodiment 202 (see figures 2A and 2B) in a glass laminate embodiment 208 that in turn is incorporated into insulated glass unit (IGU) embodiment 209 as its inside pane. Embodiment 208 is a monolithic, glass laminate that can be used on its own (i.e. not part of an IGU) and can be described as a smart glass pane, or an active glass pane, or a dynamic window pane. A pair of panes 500 and 501 is laminated to film embodiment 202 using optical adhesive sheets or resin known as interlayers (see 510). Suitable glass panes include: clear float glass, tinted/coloured glass, solar glass (i.e. infrared absorbing/reflecting glass), self-cleaning glass (e.g., Pilkington Activ), low-reflectivity glass (e.g., Pilkington Optiview), high-grade thin glass (e.g., Pilkington Microfloat), or a high optical purity glass (e.g., Pilkington Optiwhite). An example of a solar glass is green glass that has a visible light transmittance of 75% (or more) and absorbs about 35% of infrared in the wavelength band 0.9 to 1.3 micron. In some embodiments an outer pane 500 can be one type such as solar glass and an inner pane 501 another type such as clear glass. The outside environment is indicated by 1034 and the inside environment by 1033.

Panes 500 and 501 can be curved and in this case a liquid crystal film embodiment conforms to the curvature without apparent stress related artefacts. Glass laminate 208 is shown comprising a single liquid crystal film 202 that substantially covers its face area, but film 202 can also cover just a part of laminate 208 and the uncovered area can have an extra interlayer(s) or a PET sheet to create a uniform thickness between panes 500 and 501. In some embodiments an interlayer has a cut-out area that accommodates a liquid crystal film embodiment and in this case the glass laminate has three or more separate interlayer sheets in a sandwich ahead of lamination. Furthermore, a glass laminate 208 can have multiple films 202 distributed in a tiled or zoned manner (i.e. not overlapping).

An interlayer 510 can be polyvinyl butyral (PVB), ethylene-vinyl acetate (EVA) or polyurethane (PU), and advantageously incorporates a UV filtering function that absorbs 99% or more of incident UV light. Preferably, an EVA interlayer is used as these have the lowest maximum processing temperature and excellent adhesion to PET substrates. A vacuum-bag glass laminating process is preferred over an autoclave. Suitable interlayer films for use with the present invention include EVASAFE from Bridgestone Corporation, Japan, and S-LEC EN from Sekisui, Japan. Process guidelines for laminating PET films to glass are available from both suppliers. The resultant glass laminate embodiments produced according to the present invention can be free of discernible glass laminating related defects, do not suffer any objectionable optical degradation as a consequence of glass lamination, and possess suitable robustness in all window sizes.

An interlayer can be used in glass laminate embodiments to add functionality such as one or more of the following: UV filtering (>99%), safety and security (w.r.t. breakage and penetration), sound insulation, fire protection, and decoration or coloration.

On opposing substrates (i.e. opposing electrodes 60), connection ledges are prepared: a power or signal lead 522 is soldered to a copper tape 521 or other highly conductive flexible material that in turn is bonded to an exposed electrode area via a conductive adhesive or conductive ink 520. The four edges of the glass laminate are sealed with suitable silicon or other sealant 523.

Optionally embodiment 208 has a mask 524 that is enamelled or silk-screen printed by a vitrified process (e.g., EN 1863-1, EN 12150-1, EN 14179-), or mask 524 can be painted with a high performance automotive paint (i.e. a paint having excellent light fastness). In addition mask 524 can be one or more frame elements such as a 'U' shaped frame element (i.e. 'U' shaped cross section) that protects the glass edges, incorporates a sealant and can also incorporate the power leads 522 thereby providing strain relief for the leads.

Figure 8 shows the elements of a double-glaze IGU embodiment 209: chiral nematic liquid crystal glass laminate 208 forms the inner pane and its face number 4 is in contact with inside environment 1033; pane 555 is the outer pane; sealed cavity 557 fills the volume between laminate 208 and pane 555; and, IGU face number 3 (in contact with sealed cavity 557) has a coating 549 that is spectrally selective and transmits visible light while significantly rejecting sunlight infrared light. In related embodiments face number 3 has a low emissivity coating and transmits visible and sunlight infrared light while reflecting thermal radiation (i.e. long wave infrared emitted by objects in the inside environment 1033). In other IGU embodiments a spectrally selective coating 549 can be applied to face number 2 either as the sole coating or in combination with a low emissivity coating on face 3 or 4. In still other embodiments the only coating is the low emissivity type and can be on face 2, 3, or 4 or both faces 3 and 4.

Advantageously IGU embodiment 209 incorporates the chiral nematic liquid crystal embodiment 202 as part of the inner pane thermally isolated from the outside environment 1034 by the cavity 557. This ensures that the temperature of the liquid crystal embodiment remains close to the air temperature of the inside environment 1033 even in strong sunlight and/or a hot climate. Cavity 557 is sealed by spacers 558. The cavity is typically filled with a gas including argon, krypton, or dehydrated air. Optionally the cavity can be a vacuum, in particular for applications requiring the thickness of the IGU to be minimized.

Additional functional layers can be incorporated into an IGU embodiment as shown in figure 8. A user interface 586 overlaps part of the IGU 209's surface number 4. For example, user interface 586 can be a transparent touch screen and preferably it is secured to surface number 4 using a pressure sensitive adhesive. User interface 586 allows a user change light states of embodiment 209 by touching its face 4. Photovoltaic cell 551 harvests energy from the sun and can be opaque or transparent to visible light. It is shown applied (using a pressure sensitive adhesive) to IGU 209's face number 1. It can be used to power an IGU embodiment, or if the photovoltaic cell were transparent to visible light it could cover the face of a window and contribute to the energy needs of a building or vehicle. Other optional functional layers include lighting elements (e.g., an electroluminescent sheet or LEDs), or a transparent heater (i.e. a metallic coating with bus bars for electrical connection) to heat the chiral nematic liquid crystal embodiment 202 in operating conditions where it is exposed to extreme cold such as in transport applications. In use IGU embodiment 209 can be mounted in a frame that defines an opening and functions as an electro-active window.

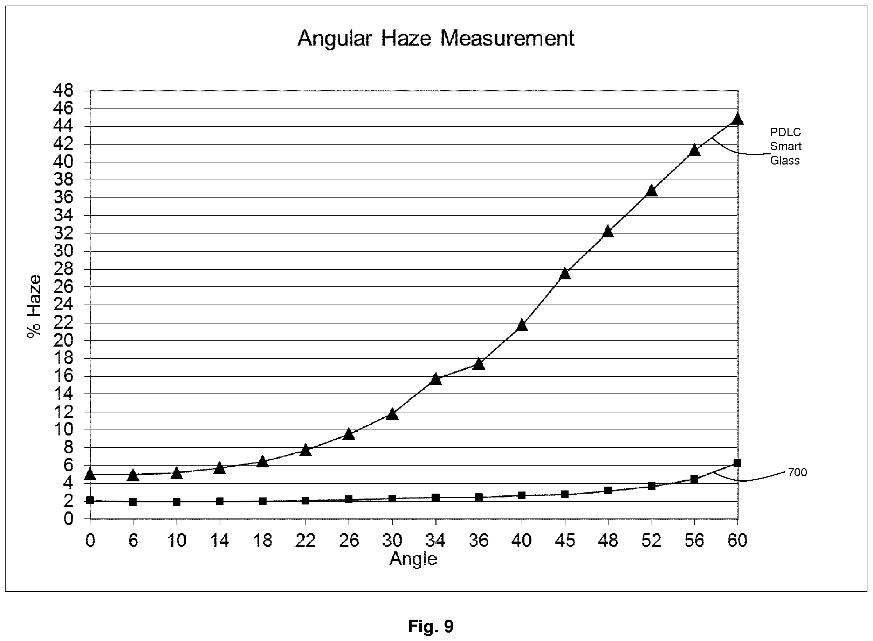

Figure 9 shows a graph of haze results 700 for a film embodiment 202 in the second light state. The preparation of the film embodiment is described in example 1 that follows. Curve 700 is a plot of the haze level as a percentage of the transmitted light corresponding to viewing angles from 0 degrees to 60 degrees from the normal to the viewing face. The haze measurement was made in accordance with international standard ISO 14782 titled 'Plastics - Determination of haze for transparent materials'. The optical measurement system was custom built in accordance with the standard and included a 1M diameter integrating sphere with ports, a stabilized light source, and a photodetector. The measured film had a cell face area of 210 x 148mm (i.e. A5 size). The angle recorded on the graph was the angle to the normal of the optic axis (i.e. the angle to a plane normal to the beam). Haze is the percentage of transmitted light passing through the embodiment's cell in the second light state which deviates from the incident light by more than 0.044 radians (2.5 degrees) by forward scattering. The 1M diameter integrating sphere had an entrance port diameter of 250mm and captured all of the forward scattered light by the embodiment as its position was varied from 0 to 60 degrees.

The haze measurement for a commercially available polymer dispersed liquid crystal (PDLC) type smart glass is also shown on the graph for comparison purposes. The graph shows that the haze performance of film embodiment 202 (i.e. curve 700) is nearly flat up to an angle of 60 degrees (i.e. corresponding to a viewing angle of 60 degrees to the normal to the face) and the haze level up to about 56 degrees is less than or equal to the measured level for the PDLC smart glass corresponding to viewing normal to its face (i.e. 0 degrees on its curve). Furthermore, the haze measurement for embodiment 202 (i.e. curve 700) corresponding to viewing normal to its face (i.e. 0 degrees on its curve) was less than half that recorded for the commercially available PDLC smart glass at the same angle.

The haze results in figure 9 shown for film embodiment 202 (i.e. curve 700) demonstrate the utility of the current invention and validate the rule for embodiments herein that haze is minimized by minimizing the total surface area between the liquid crystal and adjacent surfaces that act as discontinuities for light passing through an embodiment in the second light state and in particular the haze when viewing away from the normal to the face. A discontinuity is provided by a change in refractive index and is inevitable when light passes from a birefringent liquid crystal to an isotropic polymer that projects significantly (i.e. having a height ≥ the wavelengths of visible light) into the liquid crystal. In embodiments discontinuities in the liquid crystal include protrusions, cavity walls, and spacers. The insulating layers 55 and 95 are not discontinuities because they do not project into the liquid crystal.

While the embodiments shown in the figures can have many variations as described herein, a general guideline to their haze performance is that they have progressively less haze at viewing angles greater than 45 degrees in the following order: 201, 202, 203, and 206. As described earlier embodiment 204 is a variation of 203, and 207 is a variation of 202 and follow the order that 203 and 202 appear in respectively. As described earlier embodiment 206 has negligible haze associated with its protrusions regardless of viewing angle.

In some embodiments a field aligned liquid crystal polymer (also known as mesogenic polymer) is used for protrusions to provide birefringent protrusions that match the birefringence of the liquid crystal in the second light state (i.e. the transparent state) and thereby they avoid being discontinuities (or they minimize the significance of the discontinuity to the degree that they match the liquid crystal's birefringence). Liquid crystal polymer, or any other optically transparent birefringent polymer, can be used for the protrusions, cavity walls and spacers of any of the embodiments described herein.

Advantageously, the low increase in haze with viewing angle provided by embodiments, or negligible increase with some embodiments, is particularly attractive for insulated glass unit applications. Sunlight shining directly on the face of an IGU embodiment in the second light state does not contribute significantly to forward scattered light (i.e. light scattered by the IGU transmitted to the inside), and a viewer when looking through the window from the inside doesn't perceive a significant increase in haze when compared to viewing the same scene with direct sunlight shielded from the window's face. By contrast, placing a prior art PDLC device in the transparent state in a window where sunlight shines on its face greatly increases the light forward scattered to a viewer when looking through the window from the inside, and a viewer's perception of haze significantly increases for all viewing angles.

Next, moulding techniques are described to make the non-planar, polymer structure within chiral nematic liquid crystal cells. The moulding techniques can also be described as replication techniques. These and other suitable replication techniques are described in the applicant's PCT Application No. PCT/EP2014/054734 (Ref: V14-1346-07PCT) and are equally applicable.

In a moulding technique a non-planar, polymer surface that comprises polymer microspheres is used as a template and in moulding steps the three dimensional (3D) shape of the template's surface is transferred to a moulded (i.e. replicated) film. For example, the non-planar, polymer structure 158 described in relation to figures 2A and 2B can derive its shape from polymer microspheres. The directly-formed structure can be used as a polymer template and a mould taken of its surface to inversely replicate its shape and form a negative mould master. The negative mould master can then be used to make multiple replicas (e.g., anywhere from 1 to about 1,000 for polymer moulds) of the non-planar, polymer structure (the template). This soft moulding technique is used in example 1 described later.

In a related technique a hard, negative, mould master is made from a non-planar, polymer template by electroforming nickel onto the template's surface and thereby transferring the polymer template's shape to the surface of a hard mould master comprising the electroformed nickel surface. This has the advantage that the mould tool is more durable permitting a significantly greater number (i.e. from about 1,000 to 100,000) of replica films to be made.

In some embodiments the polymer template is the mould master and is provided as the inverse shape transferred to the replicated film. In these embodiments the preparation of a negative mould is eliminated and the moulding steps comprise: forming the replicated, non-planar, polymer structure by coating the template surface with a prepolymer and laminating the second substrate (optionally the coating is done as part of laminating), curing the coating to inversely replicate the shape of the template surface in a polymer layer secured to the second substrate, and peeling apart the template and the replicated, non-planar, polymer structure on the second substrate.

In some embodiments the template's surface is directly formed by optically writing the non-planar, polymer structure into a photosensitive polymer known as a photoresist and developing the resist. The direct writing of the template's surface in a photosensitive polymer includes the technologies described as direct-write lithography, single-point laserwriting, laser interferometry, and electron-beam lithography. Any suitable photoresist can be used including the SU8 series available from www.microchem.com. The shape of the non-planar structure is defined by polymer microstructures that can be protrusions, walls and cell gap spacers as already described. Directly writing the structure exposes the photosensitive polymer and the exposed structure is developed in solution in a separate step. Preferably a computer controlled system uses a laser beam or electron beam (e-beam) to expose the photosensitive polymer and form the shape of the non-planar, polymer surface.

In other techniques the three-dimensional surface in a hard template (e.g., metal, silicon, fused silica, or calcium fluoride) is directly formed by material removal. The hard surface can be formed by mechanical milling (e.g., Single Point Diamond Turning), chemical etching, ion-beam milling, reactive-ion etching, or laser ablation to directly form (or write) the replicating surface. Typically the inverse image (i.e. the negative) is directly formed in a small area called a tile and metal foil copies of this area (called shims) used to cover the tool surface, such as the surface of an embossing roller/drum.

### Example 1

An A5-sized (i.e. cell active area of 210 x 148mm) chiral nematic liquid crystal film was made similar to that shown in embodiment 202 (see figures 2A and 2B).

The non-planar structure 158 was moulded (i.e. replicated) on the ITO electrode surface 60 of a PET substrate film 90 (i.e. the second substrate) from a polydimethylsiloxane negative master. The negative master's prepolymer was Sylgard 184 from Dow Corning Inc. and was itself a mould of a polymer template (i.e. positive master). The polymer template and negative master were prepared as described in the applicant's PCT Application No. PCT/EP2014/054734. The former was prepared by spreading 80 micron diameter polymer spheres on an adhesive layer (described as an OCA in the document) to form a close packed, monolayer of spheres. The monolayer of spheres was coated with a controlled thickness of prepolymer to fill the interstices above their equator plane to a level corresponding to the spherical caps described later. The prepolymer was cured to provide the spherical cap protrusions of the non-planar polymer surface for the negative mould master. This and other suitable techniques to make a negative mould master (both soft and hard tooled) are described in PCT Application No. PCT/EP2014/054734and are equally applicable. Openings corresponding to cavity walls 76 were formed in the negative master using a laser to ablate material locally. A square grid of wall openings was machined using a CO₂ laser as described in PCT Application No. PCT/EP2014/054734. The corresponding cavity walls 76 in the replicated structure 158 had a width of about 50 microns and a centre-to-centre spacing of 1 mm. Before using the negative master to replicate structure 158 it was thoroughly cleaned (necessary after the laser ablating step) by blowing its surface with pressurized nitrogen in a first step, then washing with isopropanol, and finally vacuuming to remove any residual solvent.

The prepolymer resin used for structure 158 was cured by ultra-violet radiation at 10mWatts per cms² (365nm peak wavelength) for 5 minutes while still in contact with the negative master. After curing, the moulded second substrate was peeled apart from the negative master. The prepolymer used for the moulded structure 158 was a solubilized mixture of the following:
72.6% by mass: NOA 76, refractive index of cured polymer = 1.51, sourced from Norland Products Inc.
27.4% by mass: NOA 148, refractive index of cured polymer = 1.48, sourced from Norland Products Inc.

Protrusions 115 on structure 158 were as follows: spherical caps with a centre-to-centre distance 900 generally in the range 85 to 95 microns, a cap height 1005 in the range 10 to 14 microns, and a cap width 800 in the range 55 to 60 microns.

Insulating layer 55 was moulded as part of the non-planar structure 158 and its thickness was about 3 microns. Spacers 5 were discrete, spherical, polymethylmethacrylate, monodisperse beads with a diameter of 20 microns and a refractive index of 1.49. Insulating layer 95 was not present. Electrodes 60 were ITO with a resistivity of 80 ohms square and the substrates 90 were PET with a thickness of 175 microns. The substrates were OC80 sourced from Eastman Inc.

The chiral nematic liquid crystal 10 was a solubilized mixture of the following:
96.63% by mass: nematic liquid crystal ZLI3950, ordinary refractive index = 1.5018, birefringence = 0.1359, sourced from Merck KGaA.
1.15% by mass: chiral dopant ZLI4571, helical twisting power (HTP) = -33.5 (sourced from Merck KGaA).
2.22% by mass: chiral dopant S811, HTP = -13.8 (sourced from Merck KGaA).
   The resulting chiral nematic liquid crystal pitch was about 3.5 microns (measured using a microscope, camera, and image measurement software).

To 100 parts by mass of the chiral nematic liquid crystal 10, 1 part of the cell gap spacers 5 was added and the suspension sonified to disperse the spacers 5 in the liquid crystal 10.

The moulded second substrate was placed on a machined-flat, aluminium plate. The chiral nematic liquid crystal (with added spacer) was pipetted as a bead/reservoir of material along a starting edge of the cell just at the active area and about 1 cms from the edge of the substrate. The first substrate (ITO side facing the liquid crystal) was lowered over the second starting with a leading edge that was aligned to the liquid crystal bead and lowered to come into contact with the bead. The bead of liquid crystal was then laminated by being rolled down between the substrates using a silicone-coated hand roller while gradually lowering the first substrate. The spacers 5 and cavity walls 76 established the cell gap distance. Alternatively, the pair of substrates can be placed between a pair of NIP rollers to laminate the liquid crystal between the first and second substrates. Because the substrates were of equal size and offset w.r.t. their leading edges, connection edges were exposed at each end. Excess material was wiped off with a dry wipe. Note that in this example the step involving adhering the walls 76 to the top electrode 60 by an adhesive 608 was skipped. Instead, the active cell area was sealed with a suitable edge seal, and in the example the prepolymer used for structure 158 was also used for the seal. The edge seal was cured and connection wires 522 applied as described earlier in relation to figure 8. The two faces of the cell were cleaned to ensure both were free of steaks.

Applied an 200VAC, square waveform, at 50 hertz to embodiment 202 to establish the second light state. Chiral nematic liquid crystal film 202 is transparent and haze-free confirming that the refractive index of the protrusions 115 is a match to the ordinary refractive index of the chiral nematic liquid crystal 10. In the first light state (i.e. unpowered) the film blocks visual access (i.e. is not see-through), appears translucent, and retains this strong light scattering state for at least 12 hours. As previously described in relation to figure 9, curve 700 is a plot of the haze level of the current example as a percentage of the transmitted light corresponding to viewing angles from 0 degrees to 60 degrees from the normal to the viewing face in a second light state. The electrical field applied for the haze measurements was 200VAC, square waveform, at 50 hertz, and the measurements were made in a dark room.

In embodiments the liquid crystal layer is free of polymerization related components including monomers, initiators, low-molecular weight polymer, and insoluble polymer network or fractions.

As described herein, liquid crystal embodiments are provided with a distance between the substrates which is operable in the first light state to be strongly light scattering or attenuating sufficiently to block visual access through the device, and in the second light state to be substantially haze-free to the human eye for a range of viewing angles up to 60 degrees or more from the normal to the viewing face.

## Claims

1. A light shutter comprising:
a cell (301) comprising a first substrate (90) and a second (90) substrate spaced apart from said first substrate by a distance, and a layer (1201) between said substrates containing a chiral nematic liquid crystal (10) whose pitch is less than the distance between said substrates, said substrates comprising respective first and second electrodes (60) for applying an electrical field across said layer, at a surface of said layer adjacent said second electrode a monolayer of protrusions (114) project into said layer, said protrusions' centre-to-centre distance (900) and cross sectional width (800) at the plane of said second substrate being ≥ 4.0 times said pitch, and the total cross sectional area of the protrusions at the plane of the second electrode as a percentage of the encompassing face area is from 12.5% to 66%;
wherein in the absence of an electrical field said protrusions stabilize over time said chiral nematic liquid crystal in polydomains (20, 21) in said layer to the extent that said cell prevents visual access through said shutter;
and wherein in the presence of an electrical field said liquid crystal aligns with a common identifiable alignment (11) in one axis and said cell provides visual access through said shutter.

2. A light shutter according to claim 1 wherein said visual access is prevented by scattering and/or attenuating light and provided by transmitting light.

3. A light shutter according to claim 1, wherein said polydomains are anchored to or by the surface of said protrusions.

4. A light shutter according to claim 1, wherein said surface of said liquid crystal layer adjacent said second electrode is non-planar and induces non-planar alignment of said polydomains.

5. A light shutter according to claim 1, wherein respective liquid crystal molecules within said liquid crystal layer align to the surface of protrusions at a range of angles relative to the second substrate and, between protrusions, align at an angle to a surface co-planar to the second substrate, the latter angle lying outside the former range of angles.

6. A light shutter according to claim 1, wherein the height of said protrusions is ≥ 4.0 times said chiral nematic liquid crystal pitch.

7. A light shutter according to claim 1 wherein said protrusions are refractive index matched to the ordinary refractive index of said liquid crystal, preferably within 0.01 of each other, more preferably within 0.005, and most preferably within 0.002.

8. A light shutter according to claim 1, wherein alignment of said liquid crystal molecules at said second substrate includes two or more alignment types and has a different alignment to the surface of protrusions to the alignment to the surface of the area between said protrusions.

9. A light shutter according to claim 1, wherein said first electrode provides a planar surface in contact with said layer and the alignment of molecules of said liquid crystal to the surface is homeotropic.

10. A light shutter according to claim 1, wherein said protrusions are microstructures and include regular and/or irregular geometric shapes having contoured or planar faces, or, quasi-random or algorithm generated shapes.

11. A light shutter according to claim 1, wherein at least some protrusions in a cell possess differences from other protrusions, the differences including one or more of: surface shape, cross-sectional area, cross-sectional geometric form, or orientation.

12. A light shutter according to claim 1, wherein the total cross sectional area of the protrusions at the plane of the second substrate as a percentage of the encompassing face area is from 15% to 60%.

13. A light shutter according to claim 1, comprising polymer elements including said protrusions, cavity walls (76) and cell-gap spacers (6) within said cell, said polymer elements comprising optically transparent polymer including: non-polar polymer, polar polymer, liquid crystal polymer, hydrophilic polymer, fluorinated polymer, and copolymers of these.

14. A light shutter according to claim 1, wherein said liquid crystal cell is divided into a monolayer of cavities (88) and the cavities conform to the contour of said protrusions on one side and the planar surface of said first substrate on another side.

## Patentansprüche

1. Lichtblende, umfassend:
eine Zelle (301), die ein erstes Substrat (90) und ein zweites Substrat (90), das um eine Entfernung von dem ersten Substrat beabstandet ist, und eine Schicht (1201) zwischen den Substraten, die einen chiralen nematischen Flüssigkeitskristall (10) enthalten, dessen Ganghöhe geringer ist als der Abstand zwischen den Substraten, umfasst, wobei die Substrate eine jeweilige erste und zweite Elektrode (60) zum Anlegen eines elektrischen Feldes über die Schicht umfassen, auf einer Oberfläche der Schicht benachbart zu der zweiten Elektrode eine Monoschicht von Vorsprüngen (114) in die Schicht hineinragt, wobei der Mittenabstand (900) und die Querschnittsbreite (800) der Vorsprünge auf der Ebene des zweiten Substrats mehr als das 4,0 fache der Ganghöhe beträgt, und der gesamte Querschnittsbereich der Vorsprünge auf der Ebene der zweiten Elektrode als Prozentsatz des umgebenden Stirnbereichs zwischen 12,5 % und 66 % beträgt;
wobei bei nicht vorhandenem elektrischem Feld die Vorsprünge im Laufe der Zeit den chiralen nematischen Flüssigkristall in Polydomänen (20, 21) in der Schicht in dem Maße stabilisieren, dass die Zelle einen visuellen Zugang durch die Blende verhindert;
und wobei bei vorhandenem elektrischem Feld der Flüssigkristall mit einer gemeinsamen identifizierbaren Ausrichtung (11) in eine Achse ausgerichtet ist und die Zelle einen visuellen Zugang durch die Blende bereitstellt.

2. Lichtblende nach Anspruch 1, wobei der visuelle Zugang durch Streuung und/oder Dämpfung von Licht verhindert wird und durch das Übertragen von Licht bereitgestellt wird.

3. Lichtblende nach Anspruch 1, wobei die Polydomänen an der oder durch die Oberfläche der Vorsprünge verankert sind.

4. Lichtblende nach Anspruch 1, wobei die Oberfläche der Flüssigkristallschicht benachbart zu der zweiten Elektrode nicht planar ist und eine nicht planare Ausrichtung der Polydomänen hervorruft.

5. Lichtblende nach Anspruch 1, wobei jeweilige Flüssigkristallmoleküle innerhalb der Flüssigkristallschicht mit der Oberfläche der Vorsprünge in einem Winkelbereich relativ zu dem zweiten Substrat ausgerichtet sind und zwischen Vorsprüngen in einem Winkel zu einer Oberfläche koplanar zu dem zweiten Substrat ausgerichtet sind, wobei der letztere Winkel außerhalb des früheren Winkelbereichs liegt.

6. Lichtblende nach Anspruch 1, wobei die Höhe der Vorsprünge mehr als das 4,0 fache der Ganghöhe des chiralen nematischen Flüssigkristalls beträgt.

7. Lichtblende nach Anspruch 1, wobei die Vorsprünge an den üblichen Brechungsindex des Flüssigkristalls auf ihren Brechungsindex angepasst sind, vorzugsweise innerhalb von 0,01 voneinander, noch bevorzugter innerhalb von 0,005 und am meisten bevorzugt innerhalb von 0,002.

8. Lichtblende nach Anspruch 1, wobei eine Ausrichtung der Flüssigkristallmoleküle an dem zweiten Substrat zwei oder mehr Ausrichtungstypen beinhaltet und eine andere Ausrichtung zu der Oberfläche von Vorsprüngen als der Ausrichtung der Oberfläche des Bereichs zwischen den Vorsprüngen aufweist.

9. Lichtblende nach Anspruch 1, wobei die erste Elektrode eine planare Oberfläche in Kontakt mit der Schicht bereitstellt und die Ausrichtung von Molekülen des Flüssigkristalls zu der Oberfläche homöotrop ist.

10. Lichtblende nach Anspruch 1, wobei die Vorsprünge Mikrostrukturen sind und gleichmäßige und/oder ungleichmäßige geometrische Formen, die konturierte oder planare Flächen aufweisen, oder Quasizufalls- oder durch Algorithmus erzeugte Formen beinhalten.

11. Lichtblende nach Anspruch 1, wobei mindestens einige Vorsprünge in einer Zelle Unterschiede zu anderen Vorsprüngen besitzen, wobei die Unterschiede eines oder mehr beinhalten aus: Oberflächenform, Querschnittsbereich, geometrische Querschnittsform oder Ausrichtung.

12. Lichtblende nach Anspruch 1, wobei der gesamte Querschnittsbereich der Vorsprünge auf der Ebene des zweiten Substrats als Prozentsatz des umgebenden Stirnbereichs zwischen 15% und 60 % beträgt.

13. Lichtblende nach Anspruch 1, die Polymerelemente umfasst, welche die Vorsprünge, Hohlraumwände (76) und Zellspalt-Abstandhalter (6) innerhalb der Zelle beinhalten, wobei die Polymerelemente optisch transparentes Polymer umfassen, das beinhaltet: unpolares Polymer, polares Polymer, Flüssigkristallpolymer, hydrophiles Polymer, fluoriertes Polymer und Copolymere davon.

14. Lichtblende nach Anspruch 1, wobei die Flüssigkristallzelle in eine Monoschicht von Hohlräumen (88) unterteilt ist und die Hohlräume der Kontur der Vorsprünge auf einer Seite und der planaren Oberfläche des ersten Substrats auf einer anderen Seite entsprechen.

## Revendications

1. Valve à lumière comprenant :
une cellule (301) comprenant un premier substrat (90) et un second substrat (90) espacé dudit premier substrat d'une distance, et une couche (1201) entre lesdits substrats contenant un cristal liquide nématique chiral (10) dont le pas est inférieur à la distance entre lesdits substrats, lesdits substrats comprenant des première et seconde électrodes respectives (60) pour appliquer un champ électrique à travers ladite couche, au niveau d'une surface de ladite couche adjacente à ladite seconde électrode une monocouche de saillies (114) faisant saillie dans ladite couche, la distance de centre à centre (900) et la largeur de section transversale (800) desdites saillies au niveau du plan dudit second substrat étant ≥ 4,0 fois ledit pas, et l'aire de section transversale totale des saillies au niveau du plan de la seconde électrode en tant que pourcentage de l'aire de la face d'encadrement allant de 12,5 % à 66 % ;
en l'absence d'un champ électrique, lesdites saillies stabilisant, au fil du temps, ledit cristal liquide nématique chiral dans des polydomaines (20, 21) dans ladite couche dans la mesure où ladite cellule empêche un accès visuel à travers ladite valve ;
et en présence d'un champ électrique, ledit cristal liquide s'alignant avec un alignement identifiable commun (11) dans un axe et ladite cellule fournissant un accès visuel à travers ladite valve.

2. Valve à lumière selon la revendication 1, dans laquelle ledit accès visuel est empêché par diffusion et/ou atténuation de lumière et fourni par transmission de lumière.

3. Valve à lumière selon la revendication 1, dans laquelle lesdits polydomaines sont ancrés sur ou par la surfaces desdites saillies.

4. Valve à lumière selon la revendication 1, dans laquelle ladite surface de ladite couche de cristal liquide adjacente à ladite seconde électrode n'est pas plane et induit un alignement non plan desdits polydomaines.

5. Valve à lumière selon la revendication 1, dans laquelle des molécules de cristal liquide respectives à l'intérieur de ladite couche de cristal liquide s'alignent sur la surface de saillies à une plage d'angles par rapport au second substrat et, entre des saillies, s'alignent à un angle sur une surface coplanaire au second substrat, ce dernier angle étant à l'extérieur de la plage précédente d'angles.

6. Valve à lumière selon la revendication 1, dans laquelle la hauteur desdites saillies est ≥ 4,0 fois ledit pas de cristal liquide nématique chiral.

7. Valve à lumière selon la revendication 1, dans laquelle lesdites saillies ont un indice de réfraction adapté à l'indice de réfraction ordinaire dudit cristal liquide, de préférence dans les limites de 0,01 l'un de l'autre, de façon davantage préférée dans les limites de 0,005, et de la façon que l'on préfère le plus dans les limites de 0,002.

8. Valve à lumière selon la revendication 1, dans laquelle un alignement desdites molécules de cristal liquide au niveau dudit second substrat comprend au moins deux types d'alignement et a un alignement sur la surface de saillies différent de l'alignement sur la surface de la zone entre lesdites saillies.

9. Valve à lumière selon la revendication 1, dans laquelle ladite première électrode fournit une surface plane en contact avec ladite couche et l'alignement de molécules dudit cristal liquide sur la surface est homéotrope.

10. Valve à lumière selon la revendication 1, dans laquelle lesdites saillies sont des microstructures et comprennent des formes géométriques régulières et/ou irrégulières ayant des faces profilées ou planes, ou des formes quasi-aléatoires ou générées par algorithme.

11. Valve à lumière selon la revendication 1, dans laquelle au moins certaines saillies dans une cellule possèdent des différences par rapport à d'autres saillies, les différences comprenant une ou plusieurs parmi : une forme de surface, une aire de section transversale, une forme géométrique de section transversale ou une orientation.

12. Valve à lumière selon la revendication 1, dans laquelle l'aire de section transversale totale des saillies au niveau du plan du second substrat en tant que pourcentage de l'aire de la face d'encadrement est de 15 % à 60 %.

13. Valve à lumière selon la revendication 1, comprenant des éléments polymères comprenant lesdites saillies, des parois de cavité (76) et des éléments d'écartement cellule-espace (6) à l'intérieur de ladite cellule, lesdits éléments polymères comprenant un polymère optiquement transparent comprenant : un polymère non polaire, un polymère polaire, un polymère à cristaux liquides, un polymère hydrophile, un polymère fluoré et des copolymères de ceux-ci.

14. Valve à lumière selon la revendication 1, dans laquelle ladite cellule de cristal liquide est divisée en une monocouche de cavités (88) et les cavités se conforment au contour desdites saillies sur un côté et à la surface plane dudit premier substrat sur un autre côté.
